# EUROPEAN PATENT APPLICATION

(11) **EP 4 844 824 A1**
(43) Date of publication of application: **25.11.2026**
(21) Application number: 25886709.2
(22) Date of filing: 29.10.2025
(51) Int. Cl.: H01M 4/134, H01M 4/36, H01M 4/133, H01M 4/587, H01M 10/052, H01M 10/04, H01M 50/538, H01M 50/107

(54) **NEGATIVE ELECTRODE AND LITHIUM SECONDARY BATTERY COMPRISING SAME**

(30) Priority: 31.10.2024 KR 20240153034
(71) Applicant: LG Energy Solution, Ltd., Seoul 07335 (KR)
(72) Inventor: PARK, Ju Eun, Daejeon 34122 (KR); KIM, Byung Ju, Daejeon 34122 (KR); YOON, Dae Ro, Daejeon 34122 (KR); PARK, Seung Soo, Daejeon 34122 (KR)
(74) Representative: Plasseraud IP
(86) International application number: PCT/KR2025/017512
(87) International publication number: WO 2026/095646

(57) **Abstract**

The present invention relates to a negative electrode including a negative electrode collector; a first negative electrode active material layer disposed on the negative electrode collector; and a second negative electrode active material layer disposed on the first negative electrode active material layer, wherein a volume of pores included in the first negative electrode active material layer is 20% to 49% of a total volume of pores included in the first negative electrode active material layer and the second negative electrode active material layer, the first negative electrode active material layer includes a first negative electrode active material including natural graphite and a first silicon-based negative electrode active material, the second negative electrode active material layer includes a second negative electrode active material including artificial graphite and a second silicon-based negative electrode active material, and an amount of the first silicon-based negative electrode active material included in the first negative electrode active material layer is greater than an amount of the second silicon-based negative electrode active material included in the second negative electrode active material layer.

## Description

### TECHNICAL FIELD

### Cross-reference to Related Applications

This application claims priority from Korean Patent Application Nos. 10-2024-0153034, filed on October 31, 2024, and 10-2025-0159607, filed on October 29, 2025, the disclosures of which are incorporated by reference herein.

### Technical Field

The present invention relates to a negative electrode and a lithium secondary battery including the same.

### BACKGROUND ART

Lithium secondary batteries have recently been gaining attention as an energy source for electric vehicles. As the adoption of electric vehicles continues to expand, there is an increasing demand for lithium secondary batteries that may provide a longer driving range per single charge and shorter charging times.

A lithium secondary battery is generally prepared by a method in which an electrode assembly is formed by disposing a separator between a positive electrode including a positive electrode active material formed of a transition metal oxide containing lithium and a negative electrode including a negative electrode active material capable of storing lithium ions, and after the electrode assembly is inserted into a battery case, a non-aqueous electrolyte that becomes a medium for transporting lithium ions is injected and the battery case is then sealed. The non-aqueous electrolyte is generally composed of a lithium salt and an organic solvent capable of dissolving the lithium salt. Conventionally, a carbon-based material, such as natural graphite or artificial graphite, has been mainly used as the negative electrode active material of the lithium secondary battery. However, since the carbon-based negative electrode active material reacts slowly with lithium and has low capacity, a secondary battery employing the same has limitations in achieving high-capacity and rapid charging characteristics.

Accordingly, in recent years, continuous attempts have been made to apply a silicon-based negative electrode active material that has a higher capacity per unit weight than graphite. However, since the silicon-based active material undergoes volume expansion of up to 400% during charge and discharge, there are problems in that a solid electrolyte interphase (SEI) layer on a surface of the negative electrode is destroyed, life characteristics are reduced while the active material degrades, and resistance is higher than that of the carbon-based negative electrode active material.

Thus, there is a need to develop a negative electrode that has excellent resistance characteristics and excellent life characteristics during rapid charging while achieving high-capacity characteristics.

### DISCLOSURE OF THE INVENTION

### TECHNICAL PROBLEM

An aspect of the present invention provides a negative electrode having excellent capacity characteristics, resistance characteristics, and life characteristics during rapid charging, and a lithium secondary battery including the same.

### TECHNICAL SOLUTION

[1] The present invention provides a negative electrode including a negative electrode collector; a first negative electrode active material layer disposed on the negative electrode collector; and a second negative electrode active material layer disposed on the first negative electrode active material layer, wherein a volume of pores included in the first negative electrode active material layer is 11% to 49% of a total volume of pores included in the first negative electrode active material layer and the second negative electrode active material layer, the first negative electrode active material layer includes a first negative electrode active material including natural graphite and a first silicon-based negative electrode active material, the second negative electrode active material layer includes a second negative electrode active material including artificial graphite and a second silicon-based negative electrode active material, and an amount of the first silicon-based negative electrode active material included in the first negative electrode active material layer is greater than an amount of the second silicon-based negative electrode active material included in the second negative electrode active material layer.
[2] The present invention provides the negative electrode of [1] above, wherein a ratio (X₁/X₂) of the amount (X₁) of the first silicon-based negative electrode active material included in the first negative electrode active material layer to the amount (X₂) of the second silicon-based negative electrode active material included in the second negative electrode active material layer is greater than 1 and less than or equal to 10.
[3] The present invention provides the negative electrode of at least one of [1] or [2] above, wherein the first silicon-based negative electrode active material is included in an amount of 5 wt% to 30 wt% based on a total weight of the first negative electrode active material.
[4] The present invention provides the negative electrode of at least one of [1] to [3] above, wherein the second silicon-based negative electrode active material is included in an amount of 1 wt% to 20 wt% based on a total weight of the second negative electrode active material.
[5] The present invention provides the negative electrode of at least one of [1] to [4] above, wherein the first negative electrode active material layer has a porosity of 15% to 30%.
[6] The present invention provides the negative electrode of at least one of [1] to [5] above, wherein the second negative electrode active material layer has a porosity of 20% to 35%.
[7] The present invention provides the negative electrode of at least one of [1] to [6] above, wherein a thickness of the first negative electrode active material layer is 35% to 50% of a total thickness of the first negative electrode active material layer and the second negative electrode active material layer.
[8] The present invention provides the negative electrode of at least one of [1] to [7] above, wherein the first silicon-based negative electrode active material and the second silicon-based negative electrode active material each include a Si/C composite.
[9] The present invention provides a lithium secondary battery including: an electrode assembly including the negative electrode of at least one of [1] to [8] above,a positive electrode, and a separator disposed between the negative electrode and the positive electrode; an electrolyte; and a battery case in which the electrode assembly and the electrolyte are accommodated.
[10] The present invention provides the lithium secondary battery of at least one of [1] to [9] above, wherein the lithium secondary battery is a cylindrical lithium secondary battery in which a ratio of a diameter (R) of the lithium secondary battery to a height (h) of the lithium secondary battery is 0.4 or more.
[11] The present invention provides the lithium secondary battery of at least one of [1] to [10] above, wherein the lithium secondary battery is a 46110 cell, a 48110 cell, a 4880 cell, or a 4680 cell.
[12] The present invention provides the lithium secondary battery of at least one of [1] to [11] above, wherein the positive electrode and the negative electrode each include a non-coating portion in which an active material layer is not formed, and at least a portion of the non-coating portion of the positive electrode and the non-coating portion of the negative electrode defines an electrode tab.
[13] The present invention provides the lithium secondary battery of at least one of [1] to [12] above, wherein a current collecting plate is bonded to each of the non-coating portion of the positive electrode and the non-coating portion of the negative electrode, and the current collecting plate is connected to an electrode terminal.
[14] The present invention provides the lithium secondary battery of at least one of [1] to [13] above, wherein the non-coating portion of the positive electrode and the non-coating portion of the negative electrode are processed in a form of a plurality of independently bendable segments, and at least a portion of the plurality of segments is bent toward a winding center of the electrode assembly.

### ADVANTAGEOUS EFFECTS

In the present invention, a negative electrode is designed to have a two-layer structure including: a first negative electrode active material layer disposed on a current collector and including natural graphite and a first silicon-based negative electrode active material; and a second negative electrode active material layer disposed on the first negative electrode active material layer and including artificial graphite and a second silicon-based negative electrode active material, wherein a volume of pores included in the first negative electrode active material layer and a volume of pores included in the second negative electrode active material layer are controlled at an appropriate ratio, and the first negative electrode active material layer is allowed to include the silicon-based negative electrode active material in a higher amount than the second negative electrode active material layer. Accordingly, the negative electrode according to the present invention has excellent capacity characteristics and resistance characteristics and excellent life characteristics during rapid charging of a battery.

Specifically, since the volume of the pores included in the first negative electrode active material layer and the volume of the pores included in the second negative electrode active material layer are designed at an appropriate ratio, electrolyte impregnability of the first negative electrode active material layer and the second negative electrode active material layer is ensured and lithium ions are allowed to smoothly diffuse through the second negative electrode active material layer while an increase in internal resistance is suppressed, and thus, a reversal phenomenon may be suppressed.

At the same time, volume expansion of the silicon-based negative electrode active material in the upper second negative electrode active material layer during charge and discharge may be sufficiently alleviated by allowing the first negative electrode active material layer to include a higher amount of the silicon-based negative electrode active material than the second negative electrode active material layer. Accordingly, since degradation of the negative electrode active material and destruction of a solid electrolyte interphase (SEI) layer caused by the silicon-based negative electrode active material may be suppressed even if charge and discharge are repeated, degradation of the life characteristics may be prevented even during rapid charging.

As a result, the negative electrode according to the present invention may have excellent resistance characteristics by reducing interfacial resistance and surface resistance of the negative electrode, and may have excellent rapid charging performance by improving life characteristics during rapid charging.

### BRIEF DESCRIPTION OF THE DRAWINGS

FIG. 1 is a view illustrating a stacked state before winding of an electrode assembly according to the present invention.
FIG. 2 is a cross-sectional view illustrating a structure of an electrode of an electrode assembly according to an embodiment of the present invention.
FIG. 3 is a view for explaining a structure of an electrode assembly according to an embodiment of the present invention.
FIG. 4 is a cross-sectional view illustrating a structure of a lithium secondary battery according to an embodiment of the present invention.
FIG. 5 is a cross-sectional view illustrating a structure of a lithium secondary battery according to another embodiment of the present invention.
FIG. 6 is a view for explaining a battery pack according to the present invention.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular embodiments only and is not intended to be limiting of the invention. The terms of a singular form may include plural forms unless referred to the contrary.

In this specification, it will be further understood that the terms "include," "comprise," or "have" specify the presence of stated features, numbers, steps, elements, or combinations thereof, but do not preclude the presence or addition of one or more other features, numbers, steps, elements, or combinations thereof.

In the present invention, a "volume of pores" refers to a volume of pores included in an electrode active material layer. In this case, pores included in an electrode active material may not be considered. After an electrode is cross-sectioned, the volume of the pores is calculated from a nitrogen adsorption isotherm under a liquid nitrogen atmosphere at 77 K obtained using BELSORP-MAX (MicrotracBEL corp.) for a cross-section of the cut electrode, wherein it is calculated using a BJH (Barrett-Joyner-Halenda) plot for pores having diametersof2 nm to 185 nm.

For example, with respect to a negative electrode including a first negative electrode active material layer and a second negative electrode active material layer disposed on the first negative electrode active material layer, a volume of pores of the first negative electrode active material layer and a volume of pores of the second negative electrode active material layer may be measured by the following method.

(1) The negative electrode is cross-sectioned using an ion milling system with an Ar⁺ ion beam (manufacturer: HitachiHigh-Tech, product name: Ar blade 5000, accelerating voltage: 6 kV, ion beam current: 350 pA). (2) In a scanning electron microscope (SEM) image of a cross-section of the cut negative electrode, the first negative electrode active material layer and the second negative electrode active material layer are distinguished based on a difference in brightness of the first cathode active material layer and the second cathode active material layer according to an amount of a silicon-based active material, as well as thicknesses of the first negative electrode active material layer and the second negative electrode active material layer.(3) Thereafter, for each of the first negative electrode active material layer and the second negative electrode active material layer, the volume of pores is calculated from nitrogen adsorption isotherms under a liquid nitrogen atmosphere at 77 K obtained using BELSORP-MAX (MicrotracBEL corp.).

In the present invention, "porosity" refers to a percentage of the volume of pores relative to a total volume of the electrode active material layer. The porosity may be measured by methods known in the art. For example, with respect to a negative electrode including a first negative electrode active material layer and a second negative electrode active material layer disposed on the first negative electrode active material layer, the porosity may be measured by Method 1 or Method 2 below.

### [Method 1]

(1) The negative electrode is cross-sectioned using an ion milling system with an Ar⁺ ion beam (manufacturer: HitachiHigh-Tech, product name: Ar blade 5000, accelerating voltage: 6 kV, ion beam current: 350 pA). (2) In a scanning electron microscope (SEM) image of a cross-section of the cut negative electrode, the first negative electrode active material layer and the second negative electrode active material layer are distinguished based on a difference in brightness of the first cathode active material layer and the second cathode active material layer according to an amount of a silicon-based active material, as well as thicknesses of the first negative electrode active material layer and the second negative electrode active material layer. (3) A volume of each layer is calculated from cross-sectional areas of the first negative electrode active material layer and the second negative electrode active material layer. (4) Thereafter, for each of the first negative electrode active material layer and the second negative electrode active material layer, porosity of the first negative electrode active material layer and porosity of the second negative electrode active material layer may be measured by calculating percentages of the volume of pores relative to the total volume, respectively. In this case, the volume of pores may be measured by the above-described method.

### [Method 2]

(1) After a slurry for the first negative electrode active material layer is applied onto a negative electrode collector and dried, actual density of the first negative electrode active material layer is measured, and porosity of the first negative electrode active material layer is then measured by substituting theoretical electrode density of the first negative electrode active material layer and the actual density of the first negative electrode active material layer into Equation 1 below. (2) After a slurry for the second negative electrode active material layer is applied onto the first negative electrode active material layer and dried, actual density of the entire negative electrode active material layer is measured, actual density of the second negative electrode active material layer is then calculated by excluding the actual density of the first negative electrode active material layer, and porosity of the second negative electrode active material layer is measured by substituting theoretical electrode density of the second negative electrode active material layer and the actual density of the second negative electrode active material layer into Equation 1 below. In this case, the theoretical electrode density of the negative electrode active material layer refers to a value calculated from masses of all solid components, such as a negative electrode active material, a negative electrode binder, and a negative electrode conductive agent, in the negative electrode active material layer and their respective true densities. [Equation 1] 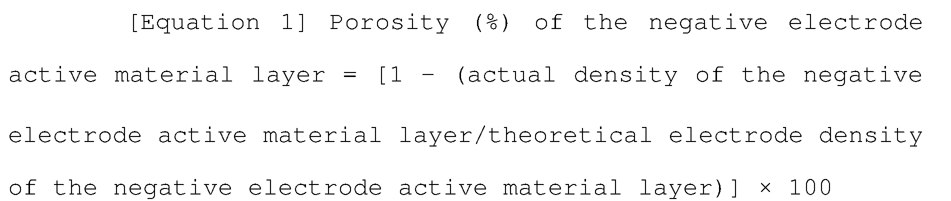 Porosity (%) of the negative electrode active material layer = [1 - (actual density of the negative electrode active material layer/theoretical electrode density of the negative electrode active material layer)] × 100

In the present invention, the expression "single particle type" denotes a particle composed of 50 or less nodules, wherein it is a concept that includes a single particle composed of one nodule and a pseudo-single particle as a composite of 2 to 50 nodules.

The "nodule" is a sub-particle unit constituting the single particle and the pseudo-single particle, wherein the nodule may be a single crystal without a crystalline grain boundary, or may be a polycrystal in which grain boundaries do not exist in appearance when observed by using a scanning electron microscope with a field of view of 5,000 times to 20,000 times.

In the present invention, the expression "secondary particle" means a particle formed by aggregation of a plurality, for example, tens to hundreds of primary particles. Specifically, the secondary particle may be an aggregate of greater than 50 primary particles.

In the present invention, the expression "particle" is a concept including any one or all of the single particle, the pseudo-single particle, the primary particle, the nodule, and the secondary particle.

In the present invention, a "loading amount" (La, unit: mg/25 cm²) refers to a total mass (mg) of a target negative electrode active material layer included per area of 25 cm². Specifically, a loading amount of the first negative electrode active material layer (Lₐ₁) may be measured by punching the negative electrode into a size of 5 cm× 5 cm in a state in which only the first negative electrode active material layer is formed on one surface of the negative electrode collector, measuring a weight W₁ of a punched region and a weight W₂ of the negative electrode collector, and then substituting the measured values into [Equation 2-1] below. [Equation 2-1] 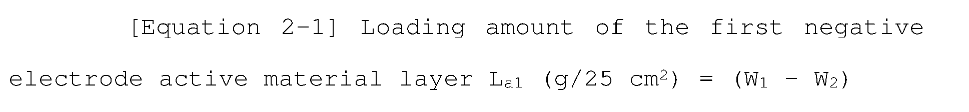 Loading amount of the first negative electrode active material layer La1 (g/25 cm2) = (W1 - W2)

Also, a loading amount of the second negative electrode active material layer (Lₐ₂) may be measured by punching the negative electrode into a size of 5 cm × 5 cm in a state in which the first negative electrode active material layer is formed on one surface of the negative electrode collector and the second negative electrode active material layer is formed on the first negative electrode active material layer, measuring a weight W₃ of a punched region, and then substituting the measured weight W₃ together with the weight W₂ of the negative electrode collector and the loading amount Lₐ₁ of the first negative electrode active material layer, which were obtained when measuring the loading amount of the first negative electrode active material layer, into [Equation 2-2] below. [Equation 2-2] 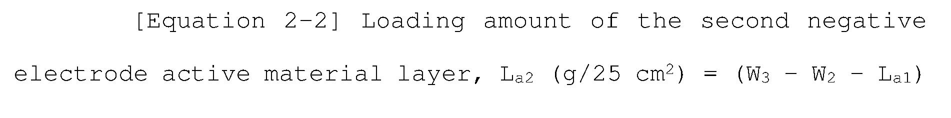 Loading amount of the second negative electrode active material layer, La2 (g/25 cm2) = (W3 - W2 - La1)

Hereinafter, the present invention will be described in more detail.

A negative electrode according to the present invention and/or a lithium secondary battery including the same include at least one of configurations disclosed below, and may include any combination between technically possible configurations among the configurations below.

### Negative Electrode

A negative electrode according to the present invention includes a negative electrode collector; a first negative electrode active material layer disposed on the negative electrode collector; and a second negative electrode active material layer disposed on the first negative electrode active material layer. A volume of pores included in the first negative electrode active material layer is 11% to 49% of a total volume of pores included in the first negative electrode active material layer and the second negative electrode active material layer. The first negative electrode active material layer includes a first negative electrode active material including natural graphite and a first silicon-based negative electrode active material. The second negative electrode active material layer includes a second negative electrode active material including artificial graphite and a second silicon-based negative electrode active material. An amount of the first silicon-based negative electrode active material included in the first negative electrode active material layer is greater than an amount of the second silicon-based negative electrode active material included in the second negative electrode active material layer.

In contrast, even if the amount of the first silicon-based negative electrode active material included in the first negative electrode active material layer is greater than the amount of the second silicon-based negative electrode active material included in the second negative electrode active material layer, in a case in which the volume of the pores included in the first negative electrode active material layer does not satisfy 11% to 49% of the total volume of the pores included in the first negative electrode active material layer and the second negative electrode active material layer, inflow of lithium ions may be difficult in the second negative electrode active material layer in contact with an electrolyte. Accordingly, since capacity and efficiency of the negative electrode may not be sufficiently exhibited during charge and discharge, a reversal phenomenon, in which a potential difference with a positive electrode occurs in an opposite direction, may occur when the negative electrode is used in a lithium secondary battery. Also, since electrolyte impregnability may be reduced due to a structure unfavorable for penetration of the electrolyte into the second negative electrode active material layer, there is a problem in that rapid charging characteristics may be inferior.

Accordingly, in the negative electrode according to the present invention, since the volume of the pores included in the first negative electrode active material layer is 11% to 49% of the total volume of the pores included in the first negative electrode active material layer and the second negative electrode active material layer and at the same time, the amount of the first silicon-based negative electrode active material included in the first negative electrode active material layer is greater than the amount of the second silicon-based negative electrode active material included in the second negative electrode active material layer, mobility of lithium ions is improved and resistance characteristics of the negative electrode is enhanced. Also, since degradation of life characteristics is suppressed even if charge and discharge are repeated at a high charging rate, rapid charging characteristics are excellent.

Hereinafter, each component of the negative electrode according to the present invention will be described in detail.

As the negative electrode collector, any negative electrode collector commonly used in the art may be used, and for example, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode collector. The negative electrode collector may typically have a thickness of 3 µm to 500 µm, and similar to a positive electrode collector, microscopic irregularities may be formed on the surface of the negative electrode collector to improve adhesion of the negative electrode active material. The negative electrode collector, for example, may be used in various shapes such as that of a film, a sheet, a foil, a net, a porous body, a foam body, a non-woven fabric body, and the like.

The first negative electrode active material layer includes a first negative electrode active material including natural graphite and a first silicon-based negative electrode active material.

Conventionally, a carbon-based negative electrode active material has been used alone as a negative electrode active material, but since the carbon-based negative electrode active material has a low capacity and a slow reaction rate with lithium, a lithium secondary battery employing the same has had limitations in achieving high-capacity characteristics and rapid charging performance. Accordingly, in the present invention, since a silicon-based negative electrode active material having a high theoretical capacity and a fast reaction rate with lithium is included together with natural graphite in the first negative electrode active material layer, capacity characteristics and rapid charging characteristics of a lithium secondary battery employing the same have been improved.

Also, since natural graphite has relatively higher structural flexibility and lower strength than artificial graphite, it may alleviate volume expansion of the silicon-based negative electrode active material. Accordingly, even if the first negative electrode active material layer includes the silicon-based negative electrode active material in a higher amount than the second negative electrode active material layer, problems caused by the volume expansion of the silicon-based negative electrode active material may be suppressed. Furthermore, since natural graphite has a relatively high tap density, the volume of the pores included in the first negative electrode active material layer may be set within a desired range and adhesion to the current collector may be improved.

The natural graphite may be included in an amount of 70 wt% to 95 wt%, 75 wt% to 92 wt%, or 80 wt% to 90 wt% based on a total weight of the first negative electrode active material. In a case in which the above range is satisfied, a balance may be achieved between capacity characteristics, rapid charging characteristics, and life characteristics.

The first silicon-based negative electrode active material may include at least one selected from the group consisting of silicon (Si), silicon oxide (may be represented asSiOₓ(0<x<2)), and a Si/C composite, and may preferably include a Si/C composite. Also, the first silicon-based negative electrode active material may be a Si/C composite.

The Si/C composite may include silicon particles embedded in a carbon matrix, rather than being in a state in which Si and carbon (C) are simply aggregated or mixed. The carbon matrix may be a porous carbon matrix.

In a case in which the first silicon-based negative electrode active material includes a Si/C composite, since a degree of volume expansion during charge and discharge may be smaller than that of silicon, degradation of life characteristics during charge and discharge may be suppressed, and capacity characteristics and electrical conductivity may be superior to those of silicon oxide because silicon and carbon exist in a mechanically bonded state. Accordingly, in the case that the first silicon-based negative electrode active material includes the Si/C composite, it has an advantage in that high-capacity characteristics of a lithium secondary battery may be achieved while improving cycle performance during rapid charging.

The Si/C composite may include silicon (Si) and carbon (C) in a weight ratio of 2:8 to 8:2, 3:7 to 7:3, or 4:6 to 6:4. In a case in which the above range is satisfied, high capacity may be achieved while improving electrical conductivity of the negative electrode active material.

The first silicon-based negative electrode active material may have a D₅₀ of 5 µm to 15 µm, 6 µm to 11 µm, or 7 µm to 9 µm. When the above range is satisfied, since negative electrode density increases, high energy density may be achieved.

An amount of the first silicon-based negative electrode active material included in the first negative electrode active material layer is greater than an amount of the second silicon-based negative electrode active material included in the second negative electrode active material layer. In this case, the amount of the first silicon-based negative electrode active material included in the first negative electrode active material layer refers to an amount of the first silicon-based negative electrode active material measured in units of wt% based on the total weight of the first negative electrode active material layer, and the amount of the second silicon-based negative electrode active material included in the second negative electrode active material layer refers to an amount of the second silicon-based negative electrode active material measured in units of wt% based on a total weight of the second negative electrode active material layer.

In the case that the amount of the first silicon-based negative electrode active material included in the first negative electrode active material layer is greater than the amount of the second silicon-based negative electrode active material included in the second negative electrode active material layer, since it may contribute to appropriately controlling a ratio of the volume of the pores included in the first negative electrode active material layer to the volume of the pores included in the second negative electrode active material layer, electrolyte impregnability of the second negative electrode active material layer may be improved and mobility of lithium ions may be improved. Also, an increase in resistance of the negative electrode caused by repeated destruction and reformation of an SEI (solid electrolyte interphase) layer due to the volume expansion of the silicon-based negative electrode active material may be suppressed by allowing the relatively smaller amount of the silicon-based negative electrode active material to be included in the second negative electrode active material layer that is in direct contact with the electrolyte. As a result, since the life characteristics may be improved when charge and discharge are repeatedly performed at a high charging rate, the rapid charging characteristics may be excellent.

A ratio (X₁/X₂) of the amount (X₁) of the first silicon-based negative electrode active material included in the first negative electrode active material layer to the amount (X₂) of the second silicon-based negative electrode active material included in the second negative electrode active material layer may be greater than 1 and less than or equal to 10. Specifically, the X₁/Xₜ may be greater than 1, 1.2 or more, 1.5 or more, 1.7 or more, 2.0 or more, 2.2 or more, 2.5 or more, 2.7 or more, 3.0 or more, 10 or less, 9 or less, 8 or less, 7 or less, 6 or less, 5 or less, 5.5 or less, 5 or less, 4.5 or less, 4 or less, 3.7 or less, 3.5 or less, 3.2 or less, or 3 or less. For example, the X₁/X₂ may be in a range of greater than 1 and less than or equal to 10, 1.2 to 8, 1.5 to 6, 2 to 4, or 2.5 to 3.5. In a case in which the above range is satisfied, the volumes of pores included in the first negative electrode active material layer and the second negative electrode active material layer may be appropriately controlled, and an effect of improving the electrolyte impregnability, lithium-ion mobility, and rapid charging characteristics may be maximized.

A weight of the first silicon-based negative electrode active material may be greater than a weight of the second silicon-based negative electrode active material. That is, the silicon-based negative electrode active material may be included in a greater weight in the first negative electrode active material layer than in the second negative electrode active material layer.

Sufficient high-capacity characteristics may be achieved while suppressing the increase in resistance of the negative electrode caused by the repeated destruction and reformation of the SEI (solid electrolyte interphase) layer due to the volume expansion of the silicon-based negative electrode active material by allowing the first negative electrode active material layer, which is a lower layer, to include a larger amount of the silicon-based negative electrode active material. Also, movement of lithium ions in the second negative electrode active material layer may be facilitated. As a result, high energy density may be achieved while providing excellent rapid charging characteristics.

The first silicon-based negative electrode active material may be included in an amount of 5 wt% to 30 wt% based on the total weight of the first negative electrode active material. Specifically, the amount of the first silicon-based negative electrode active material may be 5 wt% or more, 5.5 wt% or more, 6 wt% or more, 6.5 wt% or more, 7 wt% or more, 7.5 wt% or more, 8 wt% or more, 8.5 wt% or more, 9 wt% or more, 9.5 wt% or more, 10 wt% or more, 10.5 wt% or more, 11 wt% or more, 11.5 wt% or more, 12 wt% or more, 12.5 wt% or more, 13 wt% or more, 13.5 wt% or more, 14 wt% or more, 14.5 wt% or more, 15 wt% or more, 30 wt% or less, 29 wt% or less, 28 wt% or less, 27 wt% or less, 26 wt% or less, 25 wt% or less, 24 wt% or less, 23 wt% or less, 22 wt% or less, 21 wt% or less, 20 wt% or less, 19 wt% or less, 18 wt% or less, 17 wt% or less, 16 wt% or less, or 15 wt% or less based on the total weight of the first negative electrode active material. For example, the amount of the first silicon-based negative electrode active material may be in a range of 5 wt% to 30 wt%, 8wt% to 25 wt%, 10wt% to 20 wt%, or 13wt% to 17 wt% based on the total weight of the first negative electrode active material. In a case in which the above range is satisfied, a balance may be achieved between capacity characteristics, rapid charging characteristics, and life characteristics.

The first silicon-based negative electrode active material and the natural graphite may be included in a weight ratio of 5:95 to 30:70, 8:92 to 25:75, 10:90 to 20:80, or 13:87 to 17:83. In a case in which the above range is satisfied, the capacity characteristics, the rapid charging characteristics, and the life characteristics may all be excellent.

The first negative electrode active material may be included in an amount of 80wt% to 99.9 wt%, 90wt% to 99.7 wt%, 93wt% to 99.5 wt%, or 95wt% to 99 wt% based on the total weight of the first negative electrode active material layer. When the amount of the first negative electrode active material satisfies the above range, excellent energy density may be achieved.

The first negative electrode active material layer may further include a first negative electrode conductive agent and/or a first negative electrode binder.

The first negative electrode conductive agent is used to provide conductivity to the negative electrode, wherein any conductive agent may be used without particular limitation as long as it has electron conductivity without causing chemical changes in the battery. Specific examples of the first negative electrode conductive agent may be a carbon based-material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The first negative electrode conductive agent may be included in an amount of0.1 wt% to 10 wt%, 0.1 wt% to 8 wt%, or 0.1 wt% to 5 wt% based on the total weight of the first negative electrode active material layer.

The first negative electrode binder improves adhesion between the negative electrode active material particles and adhesion between the negative electrode active material and the negative electrode collector. Specific examples of the first negative electrode binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluoro rubber, and various copolymers thereof, and any one thereof or a mixture of two or more thereof may be used.

The first negative electrode binder may be included in an amount of0.1 wt% to 10 wt%, 0.5 wt% to 10 wt%, or 1 wt% to 8 wt% based on the total weight of the first negative electrode active material layer.

The volume of the pores included in the first negative electrode active material layer may be smaller than the volume of the pores included in the second negative electrode active material layer.

The volume of the pores included in the first negative electrode active material layer is 11% to 49% of the total volume of the pores included in the first negative electrode active material layer and the second negative electrode active material layer. Specifically, the volume of the pores included in the first negative electrode active material layer is 11% or more, 12% or more, 13% or more, 14% or more, 15% or more, 16% or more, 17% or more, 19% or more, 20% or more, 21% or more, 22% or more, 23% or more, 24% or more, 25% or more, 26% or more, 27% or more, 28% or more, 29% or more, 30% or more, 49% or less, 48% or less, 47% or less, 46% or less, 45% or less, 44% or less, 43% or less, 42% or less, 41% or less, 40% or less, 39% or less, 38% or less, 37% or less, 36% or less, 35% or less, 34% or less, 33% or less, 32% or less, 31% or less, or 30% or less of the total volume of the pores included in the first negative electrode active material layer and the second negative electrode active material layer. For example, the volume of the pores included in the first negative electrode active material layer is 11% to 49%, 20% to 49%, 22% to 40%, 25% to 35%, or 28% to 32% of the total volume of the pores included in the first negative electrode active material layer and the second negative electrode active material layer.

In a case in which the volume of the pores included in the first negative electrode active material layer is less than 11% of the total volume of the pores included in the first negative electrode active material layer and the second negative electrode active material layer as a whole, since sufficient pores may not be formed in the first negative electrode active material layer, electrolyte solution impregnability may be reduced, and accordingly, lithium-ion conductivity may be reduced, capacity characteristics may degrade, and internal resistance may increase. Also, in a case in which the volume of the pores included in the first negative electrode active material layer is greater than 49% of the total volume of the pores included in the first negative electrode active material layer and the second negative electrode active material layer as a whole, inflow of lithium ions may be difficult in the second negative electrode active material layer in contact with the electrolyte. Accordingly, since capacity and efficiency of the negative electrode may not be sufficiently exhibited during charge and discharge, a reversal phenomenon, in which a potential difference with a positive electrode occurs in an opposite direction, may occur when the negative electrode is used in a lithium secondary battery. Also, since the electrolyte impregnability may be reduced due to a structure unfavorable for penetration of the electrolyte into the second negative electrode active material layer, there is a problem in that the rapid charging characteristics may be inferior.

In a case in which the above range is satisfied, since the electrolyte may be smoothly impregnated into the second negative electrode active material layer that is in contact with the electrolyte and the movement of lithium ions may be facilitated by allowing a larger amount of pores to be included in an upper portion of the negative electrode active material layer having a two-layer structure, the lithium ions may be rapidly intercalated into and deintercalated from the negative electrode active material during charge and discharge. Accordingly, capacity may be sufficiently exhibited even if charge and discharge are performed at a high charging rate, and the life characteristics may be improved. Also, the adhesion to the current collector may be improved by relatively reducing distribution of the pores in the first negative electrode active material layer, which is a lower layer, and a contact area between the negative electrode active materials included in the first negative electrode active material layer may be increased to reduce negative electrode resistance. Furthermore, since occurrence of a binder migration phenomenon in the second negative electrode active material layer, which is the upper layer, may be suppressed, the lithium-ion mobility and adhesion to the negative electrode collector may be improved, the life characteristics may be enhanced, and an SEI layer may be uniformly formed.

The volume of the pores included in the first negative electrode active material layer and the total volume of the pores included in the first negative electrode active material layer and the second negative electrode active material layer as a whole may be controlled by porosities and thicknesses of the first negative electrode active material layer and the second negative electrode active material layer, a composition of the negative electrode active material, or rolling conditions. That is, the volume of the pores is not dependent solely on the porosity of each negative electrode active material layer, but may be controlled by organically adjusting various factors within the negative electrode.

The first negative electrode active material layer may have a porosity of 15% to 30%. Specifically, the first negative electrode active material layer may have a porosity of 15% or more, 15.5% or more, 16% or more, 16.5% or more, 17% or more, 17.5% or more, 18% or more, 18.5% or more, 19% or more, 19.5% or more, 20% or more, 20.5% or more, 21% or more, 21.5% or more, 22% or more, 30% or less, 29% or less, 28% or less, 27% or less, 26% or less, 25.5% or less, 25% or less, 24.5% or less, 24% or less, 23.5% or less, 23% or less, 22.5% or less, or 22% or less. For example, the first negative electrode active material layer may have a porosity of 15% to 30%, 18% to 28%, 20% to 24%, or 21% to 23%. In a case in which the above range is satisfied, smooth contact between the negative electrode active materials may be ensured, and high energy density may be achieved.

A thickness of the first negative electrode active material layer may be 35% to 50% of a total thickness of the first negative electrode active material layer and the second negative electrode active material layer. Specifically, the thickness of the first negative electrode active material layer may be 35% or more, 36% or more, 37% or more, 38% or more, 39% or more, 40% or more, 41% or more, 42% or more, 43% or more, 44% or more, 45% or more, 50% or less, 49% or less, 48% or less, 47% or less, 46% or less, 45% or less, 44% or less, 43% or less, 42% or less, 41% or less, or 40% or less of the total thickness of the first negative electrode active material layer and the second negative electrode active material layer. For example, the thickness of the first negative electrode active material layer may be 35% to 50%, 37% to 48%, 39% to 46%, or 41% to 45% of the total thickness of the first negative electrode active material layer and the second negative electrode active material layer. In a case in which the above range is satisfied, the volume of the pores included in the first negative electrode active material layer and the second negative electrode active material layer and the porosity of each negative electrode active material layer may be controlled to desired ranges, which is advantageous in terms of energy density and may improve rapid charging characteristics.

The thickness of the first negative electrode active material layer may be in a range of 20 µm to 90 µm, 35 µm to 75 µm, or 45 µm to 65 µm. In a case in which the above range is satisfied, pores may be appropriately formed in the first negative electrode active material layer while achieving high energy density.

A loading amount of the first negative electrode active material layer may be in a range of 50 mg/25 cm² to 160 mg/25 cm², 65 mg/25 cm² to 145 mg/25 cm², or 85 mg/25 cm² to 130 mg/25 cm². In a case in which the above range is satisfied, the first negative electrode active material layer may have pores of an appropriate volume while exhibiting sufficient capacity.

The second negative electrode active material layer includes a second negative electrode active material including artificial graphite and a second silicon-based negative electrode active material.

Conventionally, a carbon-based negative electrode active material has been used alone as a negative electrode active material, but since the carbon-based negative electrode active material has a low capacity and a slow reaction rate with lithium, a lithium secondary battery employing the same has had limitations in achieving high-capacity characteristics and rapid charging performance. Accordingly, in the present invention, since a silicon-based negative electrode active material having a high theoretical capacity and a fast reaction rate with lithium is included together with natural graphite in the first negative electrode active material layer, capacity characteristics and rapid charging characteristics of a lithium secondary battery employing the same have been improved.

Also, artificial graphite has a lower tap density than natural graphite and has lower structural flexibility and higher strength. Accordingly, in a case in which artificial graphite is included in the second negative electrode active material layer, since a pore-clogging phenomenon is less likely to occur during a negative electrode rolling process, it is advantageous for the development of pore volume, and thus, the volume of the pores included in the second negative electrode active material layer may be set within a desired range.

The artificial graphite may be included in an amount of 80 wt% to 99 wt%, 85 wt% to 98.5 wt% or 90 wt% to 98 wt% based on the total weight of the second negative electrode active material. In a case in which the above range is satisfied, a balance may be achieved between capacity characteristics, rapid charging characteristics, and life characteristics.

The second silicon-based negative electrode active material may include at least one selected from the group consisting of silicon (Si), silicon oxide (may be represented as SiOₓ (0<x<2)), and a Si/C composite, and may preferably include a Si/C composite. Also, the second silicon-based negative electrode active material may be a Si/C composite.

The Si/C composite may include silicon particles embedded in a carbon matrix, rather than being in a state in which Si and carbon (C) are simply aggregated or mixed. The carbon matrix may be a porous carbon matrix.

In a case in which the second silicon-based negative electrode active material includes a Si/C composite, since a degree of volume expansion during charge and discharge may be smaller than that of silicon, degradation of life characteristics during charge and discharge may be suppressed, and capacity characteristics and electrical conductivity may be superior to those of silicon oxide. Accordingly, in the case that the second silicon-based negative electrode active material includes the Si/C composite, it has an advantage in that high-capacity characteristics of a lithium secondary battery may be achieved while improving cycle performance during rapid charging.

The second silicon-based negative electrode active material may have a D₅₀ of 5 µm to 15 µm, 6 µm to 11 µm, or 7 µm to 9 µm. When the above range is satisfied, since negative electrode density increases, high energy density may be achieved.

The second silicon-based negative electrode active material may be included in an amount of 1 wt% to 20 wt% based on the total weight of the second negative electrode active material. Specifically, the second silicon-based negative electrode active material may be included in an amount of 1 wt% or more, 1.3 wt% or more, 1.5 wt% or more, 1.8 wt% or more, 2 wt% or more, 2.3 wt% or more, 2.5 wt% or more, 2.8 wt% or more, 3 wt% or more, 3.3 wt% or more, 3.5 wt% or more, 3.8 wt% or more, 4 wt% or more, 4.3 wt% or more, 4.5 wt% or more, 4.8 wt% or more, 5 wt% or more, 20 wt% or less, 19 wt% or less, 18 wt% or less, 17 wt% or less, 16 wt% or less, 15 wt% or less, 14 wt% or less, 13 wt% or less, 12 wt% or less, 11 wt% or less, 10 wt% or less, 9 wt% or less, 8 wt% or less, 7 wt% or less, 6 wt% or less, or 5 wt% or less based on the total weight of the second negative electrode active material. For example, the second silicon-based negative electrode active material may be included in an amount of 1wt% to 20 wt%, 1.5wt% to 15 wt%, 2wt% to 10 wt%, or 3wt% to 7 wt% based on the total weight of the second negative electrode active material. In a case in which the above range is satisfied, pores in the second negative electrode active material layer are sufficiently secured to alleviate degradation of lifetime due to the volume expansion of the silicon-based negative electrode active material, conductivity is excellent, and degradation of the life characteristic may be prevented even during rapid charging.

The second silicon-based negative electrode active material and the artificial graphite may be included in a weight ratio of 1:99 to 20:80, 1.5:98.5 to 15:85, 2:98 to 10:90, or 3:97 to 7:93. In a case in which the above range is satisfied, the capacity characteristics, the rapid charging characteristics, and the life characteristics may all be excellent.

The second negative electrode active material may be included in an amount of 80wt% to 99.9 wt%, preferably 90wt% to 99.7 wt%, more preferably 93wt% to 99.5 wt%, or 95wt% to 99 wt% based on the total weight of the second negative electrode active material layer. When the amount of the second negative electrode active material satisfies the above range, excellent energy density may be achieved.

The second negative electrode active material layer may further include a second negative electrode conductive agent and/or a second negative electrode binder.

The second negative electrode conductive agent is used to provide conductivity to the negative electrode, wherein any conductive agent may be used without particular limitation as long as it has electron conductivity without causing chemical changes in the battery. Specific examples of the first negative electrode conductive agent may be a carbon based-material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The second negative electrode conductive agent may be included in an amount of0.1 wt% to 10 wt%, 0.1 wt% to 8 wt%, or 0.1 wt% to 5 wt% based on the total weight of the second negative electrode active material layer.

The second negative electrode binder improves adhesion between the negative electrode active material particles and adhesion between the negative electrode active material and the negative electrode collector. Specific examples of the first negative electrode binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluoro rubber, and various copolymers thereof, and any one thereof or a mixture of two or more thereof may be used.

The second negative electrode binder may be included in an amount of0.1 wt% to 10 wt%, 0.5 wt% to 10 wt%, or 1 wt% to 8 wt% based on the total weight of the second negative electrode active material layer.

The second negative electrode active material layer may have a porosity of 20% to 35%. Specifically, the second negative electrode active material layer may have a porosity of 20% or more, 21% or more, 22% or more, 23% or more, 24% or more, 25% or more, 25.5% or more, 26% or more, 26.5% or more, 27% or more, 27.5% or more, 28% or more, 28.5% or more, 29% or more, 29.5% or more, 30% or more, 30.5% or more, 31% or more, 31.5% or more, 32% or more, 35% or less, 34.5% or less, 34% or less, 33.5% or less, 33% or less, 32.5% or less, 32% or less, 31.5% or less, 31% or less, 30.5% or less, 30% or less, 29.5% or less, 29% or less, 28.5% or less, or 28% or less. For example, the second negative electrode active material layer may have a porosity of 20% to 35%, 22% to 33%, 24% to 31%, 26 to 30%, or 27 to 29%. In a case in which the above range is satisfied, pores are sufficiently developed within the second negative electrode active material layer to facilitate electrolyte impregnation, and accordingly, since the movement of lithium ions is facilitated, rapid intercalation and deintercalation of the lithium ions into and from the negative electrode active material may be repeated, and thus, the rapid charging characteristics may be improved.

The first negative electrode active material layer and the second negative electrode active material layer as a whole may have a porosity of 20% to 30%, 23% to 27%, or 24% to 26%. In a case in which the above range is satisfied, density of the entire negative electrode is appropriate, and sufficient capacity characteristics may be exhibited.

A thickness of the second negative electrode active material layer may be in a range of 40 µm to 110 µm, 55 µm to 95 µm, or 65 µm to 85 µm. In a case in which the above range is satisfied, pores may be appropriately formed in the second negative electrode active material layer while achieving high energy density.

A loading amount of the second negative electrode active material layer may be in a range of 95 mg/25 cm² to 205 mg/25 cm², preferably 110 mg/25 cm² to 190 mg/25 cm², and more preferably130 mg/25 cm² to 175 mg/25 cm². In a case in which the above range is satisfied, the second negative electrode active material layer may have pores of an appropriate volume while exhibiting sufficient capacity.

The negative electrode may be prepared by a method in which a first negative electrode active material layer slurry is applied to one side or both sides of a sheet-shaped negative electrode collector, a second negative electrode active material layer slurry is applied onto the first negative electrode active material layer slurry, solvents of the first negative electrode active material layer slurry and the second negative electrode active material layer slurry are removed through a drying process, and rolling is performed. A negative electrode including a non-coating portion may be prepared by a method in which the first negative electrode active material layer slurry and the second negative electrode active material layer slurry are not applied to a partial region of the negative electrode collector, for example, one end of the negative electrode collector when the first negative electrode active material layer slurry and the second negative electrode active material layer slurry are applied.

The first negative electrode active material layer slurry and the second negative electrode active material layer slurry may be prepared by dispersing the first negative electrode active material or the second negative electrode active material in a solvent such as distilled water, ethanol, methanol, or isopropyl alcohol.

Also, the negative electrode may be prepared by casting the first negative electrode active material layer slurry and the second negative electrode active material layer slurry on a separate support and then laminating a film separated from the support on the negative electrode collector.

### Lithium Secondary Battery

A lithium secondary battery according to the present invention includes an electrode assembly including the above-described negative electrode, a positive electrode, and a separator disposed between the negative electrode and the positive electrode; an electrolyte; and a battery case in which the electrode assembly and the electrolyte are accommodated.

The lithium secondary battery according to the present invention is not limited in type to a pouch type secondary battery, a cylindrical secondary battery, or a prismatic secondary battery, and may preferably be a cylindrical secondary battery.

Hereinafter, each component of the lithium secondary battery according to the present invention will be described in detail.

### (1) Electrode Assembly

The electrode assembly includes the above-described negative electrode, a positive electrode, and a separator disposed between the negative electrode and the positive electrode.

The electrode assembly may be formed by sequentially stacking a positive electrode, a separator, and a negative electrode, and the positive electrode and the negative electrode may be mutually insulated by the separator.

Specifically, the electrode assembly may be one in which a positive electrode, a separator, and a negative electrode are sequentially stacked and wound in one direction.

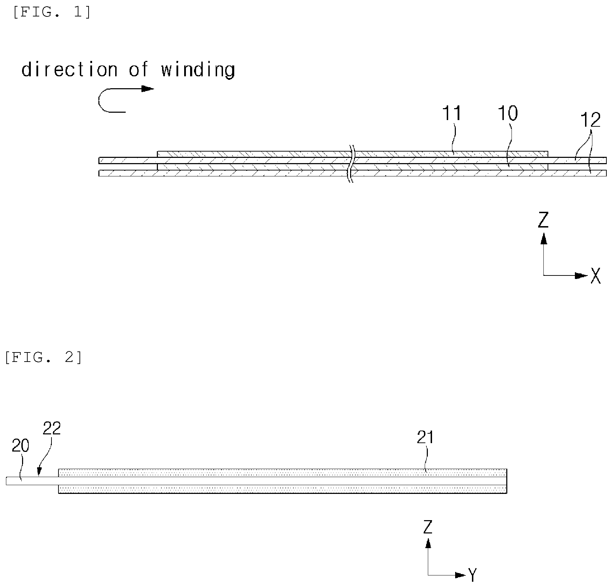

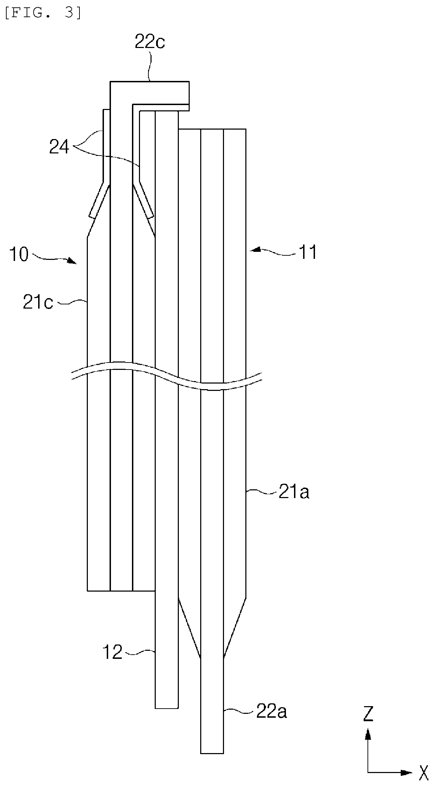

A stacked structure before winding of an electrode assembly according to an embodiment of the present invention is illustrated in FIG. 1, a cross-sectional structure of an electrode plate (positive electrode or negative electrode) according to an embodiment of the present invention is illustrated in FIG. 2, and a structure of an electrode assembly according to an embodiment of the present invention is illustrated in FIG. 3.

Referring to FIGS. 1 and 2, an electrode assembly A of the present invention may be prepared by winding a stack, which is formed by sequentially stacking a separator 12, a positive electrode 10, a separator 12, and a negative electrode 11 at least once in one direction X.

In this case, the positive electrode 10 and the negative electrode 11 each have a structure in which an active material layer 21 is formed on a sheet-shaped current collector 20, and may include a non-coating portion 22 in which the active material layer 21 is not formed in a partial region of the current collector 20.

If the positive electrode 10 and the negative electrode 11, which include the non-coating portion 22as described above, are used, a battery having a structure, in which a separate electrode tab is not included and at least a portion of the non-coating portions of the positive electrode 10 and the negative electrode 11 defines an electrode tab, may be achieved.

Specifically, the non-coating portion 22 may be formed long along the winding direction X on one side end of the current collector 20, and the non-coating portion may function as an electrode tab by bonding a current collecting plate to each of the non-coating portion of the positive electrode and the non-coating portion of the negative electrode and connecting the current collecting plate to an electrode terminal.

For example, a battery, in which the non-coating portion of the positive electrode and the non-coating portion of the negative electrode function as electrode tabs, may be prepared through the following method. First, the separator, the positive electrode, the separator, and the negative electrode are sequentially stacked such that the non-coating portion of the positive electrode and the non-coating portion of the negative electrode are disposed in opposite directions to each other and then wound in one direction to prepare a jelly-roll-type electrode assembly. Then, after bending the non-coating portion of the positive electrode and the non-coating portion of the negative electrode toward a winding center C, current collecting plates are welded and bonded to the non-coating portion of the positive electrode and the non-coating portion of the negative electrode, respectively, and a battery is prepared by connecting the current collecting plates to the electrode terminals. Since the current collecting plate has a larger cross-sectional area than a strip-type electrode tab and resistance is inversely proportional to a cross-sectional area of a passage through which current flows, cell resistance may be significantly reduced when a secondary battery is formed in the above-described structure.

The positive electrode and negative electrode non-coating portions may be processed in a form of a plurality of independently bendable segments, and at least a portion of the plurality of segments may be bent toward the winding center C of the electrode assembly.

The segments may be formed by processing the current collectors of the positive electrode and the negative electrode through a metal foil cutting process such as laser notching, ultrasonic cutting, and punching.

In a case in which the non-coating portions of the positive electrode and the negative electrode are processed in the form of the plurality of segments, deformation or damage of the non-coating portions may be prevented by reducing stress that is applied to the non-coating portions during bending, and welding characteristics with the current collecting plate may be improved.

The current collecting plate and the non-coating portion are generally bonded by welding, wherein, in order to improve the welding characteristics, a strong pressure must be applied to a welding region of the non-coating portion to bend the non-coating portion as flat as possible. However, a shape of the non-coating portion may be irregularly distorted and deformed during this bending process, and the deformed portion may contact the electrode of opposite polarity to cause an internal short circuit or cause micro-cracks in the non-coating portion. However, if the non-coating portions of the positive electrode and the negative electrode are processed in the form of the plurality of independently bendable segments, the stress applied to the non-coating portions during bending is mitigated so that the deformation and damage of the non-coating portions may be minimized.

Also, in a case in which the non-coating portion is processed in the form of segments as described above, an overlap occurs between the plurality of segments during bending, and, as a result, welding strength with respect to the current collecting plate is increased and a problem, in which, when the latest technique, such as laser welding, is used, a laser beam penetrates into the electrode assembly to ablate the separator or the active material, may be prevented. Preferably, at least a portion of the plurality of bent segments may be overlapped on an upper end and a lower end of the electrode assembly, and the current collecting plate may be bonded to the overlapped plurality of segments.

As illustrated in FIG. 3, the electrode assembly according to the present invention may be formed in a structure in which an insulation layer 24 is additionally formed on the positive electrode 10. Specifically, the insulation layer 24 may be formed to cover a portion of a positive electrode active material layer and a portion of the non-coating portion along a direction parallel to the winding direction of the electrode assembly.

With respect to a battery having a tab-less structure in which anon-coating portion 22c of the positive electrode 10 and anon-coating portion 22a of the negative electrode 11 are used as electrode tabs, an electrode assembly is formed such that the positive electrode 10 protrudes above the separator 12 and the negative electrode 11 protrudes below the separator 12, and the protruding positive electrode 10 and/or negative electrode 11 are bent and then bonded to the current collecting plate. In a case in which the positive electrode 10 or the negative electrode 11 is bent as described above, the current collector of the positive electrode 10 or the negative electrode 11 crosses the separator and is disposed close to the electrode having an opposite polarity, and, as a result, there is a possibility that the positive electrode and the negative electrode are electrically contacted to cause an internal short circuit. However, as illustrated in FIG. 3, in a case in which the insulation layer 24 covering the portions of the positive electrode active material layer and the non-coating portion is formed, since the electrical contact between the positive electrode 10 and the negative electrode 11 may be prevented by the insulation layer 24, occurrence of a short circuit in the battery may be prevented.

Preferably, the insulation layer 24 may be provided on at least one side of the current collector of the positive electrode 10, and preferably, may be provided on both sides of the positive electrode 10.

Also, the insulation layer 24 may be formed in a region of the positive electrode 10 which may face an active material layer 21a of the negative electrode 11.For example, on a surface of the non-coating portion 22c of the positive electrode 10 which faces the negative electrode 11 after being bent, the insulation layer 24 may be formed by extending to an end of the non-coating portion 22c.However, with respect to a surface opposite to the surface facing the negative electrode 11 after being bent, it is desirable that the insulation layer 24 is formed only on a portion of the non-coating portion 22c, for example, before a bending point of the non-coating portion 22c.The reason for this is that, in a case in which the insulation layer 24 is formed on an entire region of the non-coating portion of the surface opposite to the surface facing the negative electrode 11, since an electrical contact with the current collecting plate is not possible, it may not function as the electrode tab.

The insulation layer 24 may be used as long as it may be attached to the positive electrode while ensuring insulation performance, and a material or component thereof is not particularly limited. For example, the insulation layer may be an insulation coating layer or an insulation tape, and the insulation coating layer may include an organic binder and inorganic particles. In this case, the organic binder, for example, may be a styrene-butadiene rubber (SBR), and the inorganic particles may be alumina oxide, but are not limited thereto.

Hereinafter, each component of the electrode assembly of the present invention will be described in more detail. Since the negative electrode is the same as described above, a detailed description thereof will be omitted.

### 1) Positive Electrode

The positive electrode may include a positive electrode collector; and a positive electrode active material layer, and the positive electrode active material layer may include a positive electrode active material.

As the positive electrode collector, various positive electrode collectors used in the art may be used. For example, as the positive electrode collector, stainless steel, aluminum, nickel, titanium, fired carbon, or aluminum or stainless steel that is surface-treated with one of carbon, nickel, titanium, silver, or the like may be used. The positive electrode collector may typically have a thickness of 3 µm to 500 µm, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a nonwoven fabric body, and the like.

The positive electrode active material layer may be disposed on the positive electrode collector, and may specifically be disposed on one side or both sides of the positive electrode collector. The positive electrode active material layer may have a single-layer structure or a multilayer structure of two or more layers.

Positive electrode active materials commonly used in the art may be used as the above positive electrode active material, and a type thereof is not particularly limited. The positive electrode active material is a compound capable of reversibly intercalating and deintercalating lithium, wherein the positive electrode active material may specifically include a lithium transition metal composite oxide including lithium and at least one transition metal selected from the group consisting of nickel, cobalt, manganese, and aluminum, preferably, a lithium transition metal composite oxide including lithium and transition metal containing nickel, cobalt, and manganese.

Preferably, the positive electrode active material may include a lithium nickel-based oxide. The lithium nickel-based oxide may include nickel among total metals excluding lithium in an amount of 80 mol% or more. Specifically, the positive electrode active material may include nickel among the total metals excluding lithium in an amount of 80 mol% or more, preferably 85 mol% or more, more preferably 90 mol% or more, more preferably 91 mol% or more, more preferably 92 mol% or more, and more preferably 93 mol% or more. In a case in which the above range is satisfied, better capacity characteristics may be achieved.

The lithium nickel-based oxide may include nickel, cobalt, manganese, and aluminum. In this case, it may be stable at high potentials and may have excellent structural stability and thermal stability while having excellent capacity characteristics and output characteristics.

Specifically, the lithium nickel-based oxide may be represented by Formula 1 below.

[Formula 1] Li₁₊ₐ₁[Niₓ₁Co_{y1}Mn_{z1}Al_{w1}M¹ᵣ₁]O₂

In Formula 1,M¹ may correspond to a doping element that partially substitutes a transition metal element included in the lithium nickel-based oxide, and may play a role in improving structural stability by inhibiting movement of nickel ions to prevent a problem of change in valence of nickel (Ni) from 2+ to 4+ and a problem of cation mixing. Specifically, M¹may beat least one doping element selected from the group consisting of tungsten (W), copper (Cu), iron (Fe), vanadium (V), chromium (Cr), titanium (Ti), zirconium (Zr), zinc (Zn), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and may preferably be at least one doping element selected from the group consisting of W, Y, barium (Ba), Ca, Ti, Mg, Ta, and Nb.

1+a1 may refer to a molar ratio of lithium (Li) in the lithium nickel-based oxide, wherein a1 may satisfy 0≤a1≤0.5, 0≤a1≤0.2, 0≤a1≤0.1, or 0≤a1≤0.05. In a case in which the above range is satisfied, the positive electrode active material may form a stable layered crystal structure.

x1 may refer to a molar ratio of nickel among the total metals excluding lithium in lithium nickel-based oxide particles, wherein x1 may satisfy 0.8≤x1<1, 0.85≤x1<1, 0.9≤ x1<1, 0.92≤x1<1, or 0.93≤x1<1. In a case in which the above range is satisfied, since a sufficient amount of the nickel (Ni) is secured in the lithium nickel-based oxide to contribute to charge and discharge, higher capacity may be achieved.

y1 may refer to a molar ratio of cobalt among the total metals excluding lithium in the lithium nickel-based oxide particles, wherein y1 may satisfy 0<y1<0.20, 0<y1≤0.10, or 0<y1≤0.08. In a case in which the above range is satisfied, it is possible to achieve good resistance characteristics and output characteristics while having a cost advantage by lowering a cobalt (Co) content, and it is possible to improve the structural stability of the positive electrode active material by relatively increasing a proportion of manganese (Mn) .

z1 may refer to a molar ratio of Mn among the total metals excluding lithium in the lithium nickel-based oxide particles, wherein z1 may satisfy 0<z1<0.20, 0<z1≤0.15, 0.001 ≤z1≤0.10, or 0.01≤z1≤0.08. In a case in which the above range is satisfied, the structural stability of the positive electrode active material may be improved.

w1 represents a molar ratio of aluminum (Al) among the total metals excluding lithium in the lithium nickel-based oxide, wherein w1 may satisfy 0<w1≤0.2, 0<w1≤0.10, or 0.01≤ w1≤0.08. In a case in which the above range is satisfied, the structural stability and thermal stability of the positive electrode active material may be further improved.

r1 represents a molar ratio of element M¹ among the total metals excluding lithium in the lithium nickel-based oxide, wherein r1 may satisfy 0≤r1≤0.1, specifically 0≤r1≤ 0.07, and more specifically 0≤r1≤0.05. In a case in which the above range is satisfied, it may promote particle growth during sintering of the positive electrode active material or may play a role in improving crystal structure stability.

A form of the lithium nickel-based oxide is not particularly limited, and the lithium nickel-based oxide may be in the form of a secondary particle in which more than 50 primary particles are aggregated, or in the form of a single particle including 50 or fewer nodules. If necessary, a mixture of a positive electrode active material including the lithium nickel-based oxide in the form of a secondary particle and a positive electrode active material including the lithium nickel-based oxide in the form of a single particle may be used. With respect to the positive electrode active material including the lithium nickel-based oxide in the form of a secondary particle, resistance and capacity characteristics are excellent, and with respect to the positive electrode active material including the lithium nickel-based oxide in the form of a single particle, high-temperature/high-voltage stability and life characteristics are excellent. Thus, an appropriate form of the lithium nickel-based oxide may be selected and used in consideration of performance and specifications of the lithium secondary battery to be prepared.

According to an embodiment, the lithium nickel-based oxide may be a lithium nickel-based oxide in the form of a single particle including 50 or fewer nodules.

With respect to the lithium nickel-based oxide in the form of a single particle, since particle breakage due to rolling during preparation of the positive electrode is less than that of the lithium nickel-based oxide in the form of a secondary particle and structural stability under high-temperature and/or high-voltage conditions is excellent, degradation of the positive electrode under high-temperature/high-voltage conditions is reduced and generation of fine particles after the preparation of the positive electrode is suppressed in a case in which the lithium nickel-based oxide in the form of a single particle is used, and thus, there is less gas generation due to a side reaction between the fine particles and the electrolyte. Thus, in the case that the lithium nickel-based oxide in the form of a single particle is used, it is advantageous for preparing a lithium secondary battery having long life characteristics.

The lithium nickel-based oxide in the form of a single particle may include 50 or fewer nodules, preferably 30 or fewer nodules, more preferably 1 to 25 nodules, and still more preferably 1 to 15 nodules. The reason for this is that, in a case in which the lithium nickel-based oxide in the form of a single particle includes an excessive number of nodules, since the particle breakage during the electrode preparation may increase and internal crack formation due to volume expansion/contraction of the nodules during charge and discharge may increase, high-temperature life characteristics and high-temperature storage characteristics may be inferior.

The positive electrode active material may be included in an amount of 80 wt% to 99 wt%, preferably, 92 wt% to 98.5 wt% based on a total weight of the positive electrode active material layer in consideration of exhibition of sufficient capacity of the positive electrode active material.

The positive electrode active material layer may optionally further include at least one of a positive electrode conductive agent and a positive electrode binder.

The positive electrode conductive agent is used to provide conductivity to the electrode, wherein any conductive agent may be used without particular limitation as long as it has electron conductivity without causing chemical changes in the battery. Specific examples of the positive electrode conductive agent may be graphite such as natural graphite or artificial graphite; a carbon-based material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The positive electrode conductive agent may be typically included in an amount of 1 wt% to 30 wt%, preferably 1 wt% to 20 wt%, and more preferably 1 wt% to 10 wt% based on the total weight of the positive electrode active material layer.

The positive electrode binder improves adhesion between positive electrode material particles and adhesion between the positive electrode material and the positive electrode collector, wherein specific examples of the positive electrode binder may be a fluorine resin-based binder including polyvinylidene fluoride (PVDF) or polytetrafluoroethylene (PTFE); a rubber-based binder including a styrenebutadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The positive electrode binder may be included in an amount of1 wt% to 30 wt%, preferably 1 wt% to 20 wt%, and more preferably 1 wt% to 10 wt% based on the total weight of the positive electrode active material layer.

The positive electrode may be prepared by a method in which a positive electrode slurry is applied to one side or both sides of a sheet-shaped positive electrode collector, a solvent of the positive electrode slurry is removed through a drying process, and rolling is performed. A positive electrode including a non-coating portion may be prepared by a method in which the positive electrode slurry is not applied to a partial region of the positive electrode collector, for example, one end of the positive electrode collector when the positive electrode slurry is applied.

Also, the positive electrode slurry may be prepared by dispersing a positive electrode material according to the present invention in a solvent such as dimethyl sulfoxide (DMSO), isopropyl alcohol, N-methylpyrrolidone (NMP), acetone, or water.

### 2) Separator

The separator is disposed between the positive electrode and the negative electrode.

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

### (2) Electrolyte

The electrolyte according to the present invention may include a lithium salt and an organic solvent.

The lithium salt may be used without particular limitation as long as it is a compound capable of providing lithium ions used in the lithium secondary battery. Specifically, as the lithium salt,LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiFSI, or LiB(C₂O₄)₂may be used. A concentration of the lithium salt is preferably used in a range of 0.1 M to 5.0 M, more preferably, 0.1 M to 3.0 M. Since the electrolyte may have appropriate conductivity and viscosity when the concentration of the lithium salt is included within the above range, excellent performance of the electrolyte may be obtained and lithium ions may effectively move.

The organic solvent may include at least one of a cyclic carbonate-based organic solvent, a linear carbonate-based organic solvent, a linear ester-based organic solvent, and a cyclic ester-based organic solvent.

The cyclic carbonate-based organic solvent is a highly viscous organic solvent, wherein the cyclic carbonate-based organic solvent may typically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

The cyclic ester-based organic solvent may include at least one organic solvent selected from the group consisting of butyrolactone, valerolactone, and caprolactone.

Preferably, the electrolyte according to the present invention may include ethylene carbonate and dimethyl carbonate as the organic solvent.

In order to improve life characteristics of the battery, suppress a reduction in battery capacity, and improve discharge capacity of the battery, the electrolyte may further include other additives in addition to the electrolyte components.

Typical examples of these other additives may include at least one other additive selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

Specifically, the other additives may include one selected from the group consisting of vinylene carbonate (VC), vinyl ethylene carbonate, fluoroethylene carbonate (FEC),1,3-propane sultone (PS), 1,4-butane sultone, ethane sultone, 1,3-propene sultone (PRS), 1,4-butene sultone, 1-methyl-1,3-propenesultone, ethylene sulfate (Esa), trimethylene sulfate (TMS), methyl trimethylene sulfate (MTMS), tetraphenylborate,lithium oxalyldifluoroborate, succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, LiN(SO₂F)₂ (Lithium bis (fluorosulfonyl) imide, LiFSI), LiN (SO₂CF₃)₂ (lithium bis(trifluoromethane sulfonyl) imide, LiTFSI), LiPO₂F₂, LiODFB, LiBOB(lithium bis (oxalato) borate, LiB(C₂O₄)₂), and LiBF₄, or a compound of two or more thereof.

The other additives may be included in an amount of 0.01 wt% to 20 wt% based on a total weight of the electrolyte, and may preferably be included in an amount of 0.05 wt% to 5.0 wt%. If the amount of the other additives is less than 0.01 wt%, effects of improving low-temperature output, high-temperature storage characteristics, and high-temperature life characteristics of the battery are insignificant, and, if the amount of the other additives is greater than 20 wt%, there is a possibility that a side reaction in the electrolyte occurs excessively during charge and discharge of the battery. Particularly, since the other additives may not be sufficiently decomposed at high temperatures when an excessive amount of the additives for forming an SEI layer is added, the other additives may be present in the form of an unreacted material or precipitates in the electrolyte at room temperature. Accordingly, a side reaction may occur in which life or resistance characteristics of the secondary battery are degraded.

### (3) Battery Case

The battery case may be a can-type battery case or a pouch-type battery case which is used in the art.

Specifically, the battery case may be a can-type battery case. The can-type battery case may be either a prismatic battery case or a cylindrical battery case. More specifically, the battery case may be a cylindrical battery case. However, the present invention is not limited thereto, and the lithium secondary battery according to the present invention may use various battery cases depending on circumstances.

Specifically, the lithium secondary battery according to the present invention may be a cylindrical lithium secondary battery in which a ratio of a diameter (R) of the lithium secondary battery to a height (h) of the lithium secondary battery is 0.4 or more, 0.4 to 0.8, or 0.5 to 0.8.In a case in which the ratio satisfies the above range, high-capacity characteristics may be achieved. Hereinafter, the ratio of the diameter (R) of the lithium secondary battery to the height (h) of the lithium secondary battery is referred to as a form factor.

The lithium secondary battery according to the present invention, for example, may be a 46110 cell (diameter 46 mm, height 110 mm, form factor ratio 0.418), a 4875 cell (diameter 48 mm, height 75 mm, form factor ratio 0.640), a 48110 cell (diameter 48 mm, height 110 mm, form factor ratio 0.436), a 4880 cell (diameter 48 mm, height 80 mm, form factor ratio 0.600), or a 4680 cell (diameter 46 mm, height 80 mm, form factor ratio 0.575). In a number representing the form factor, first two numbers represent the diameter of the lithium secondary battery, and next two or three numbers represent the height of the lithium secondary battery.

Next, an embodiment of the lithium secondary battery according to the present invention will be described.

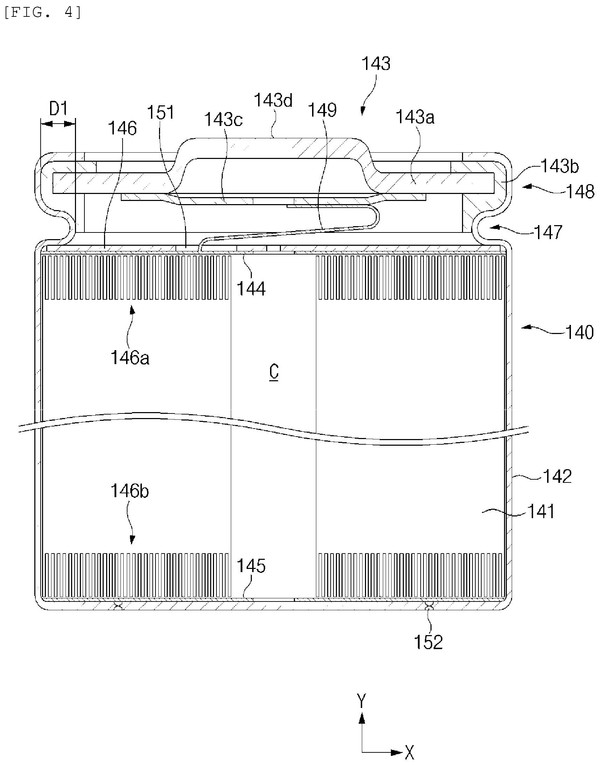

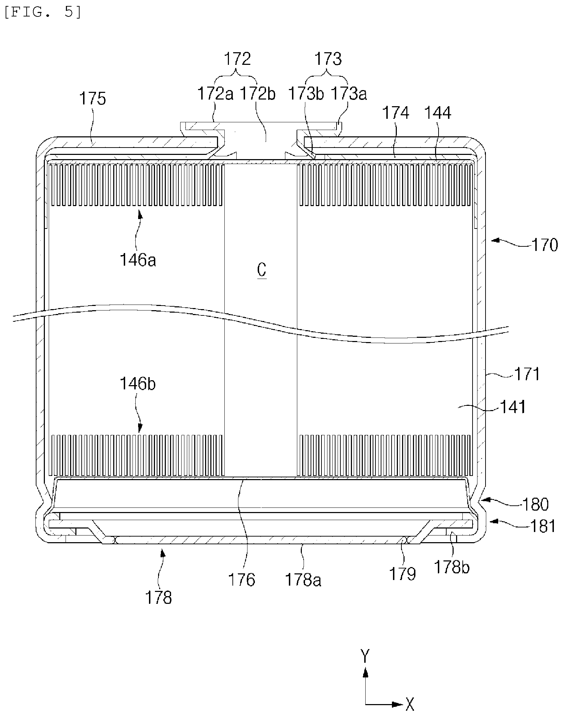

Examples of the lithium secondary battery according to the present invention are disclosed in FIGS.4 and 5.Hereinafter, with reference to FIGS.4 and 5, the lithium secondary battery according to the present invention will be described. However, FIGS.4 and 5 only show one embodiment of the present invention, and a structure of the battery of the present invention is not limited to the scope disclosed in FIGS.4 and 5.

FIG. 4 illustrates a cross-sectional view of a lithium secondary battery according to an embodiment of the present invention.

Referring to FIG. 4, a lithium secondary battery 140 according to the present invention includes an electrode assembly 141, a battery can 142 in which the electrode assembly 141 and an electrolyte (not shown) are accommodated, and a sealing body 143 sealing an open end of the battery can142.

In this case, the electrode assembly is one in which the positive electrode, the separator, and the negative electrode are sequentially stacked and wound in one direction. Also, a positive electrode and a negative electrode of the electrode assembly each include a non-coating portion on which an active material layer is not formed, and may be stacked and wound such that the non-coating portion of the positive electrode and the non-coating portion of the negative electrode are disposed at the upper end and the lower end of the electrode assembly, respectively. Since the electrode assembly has been described above, only components other than the electrode assembly will be described below.

The battery can142 is a can-type container having an upper open end, wherein it is formed of a conductive metallic material such as aluminum or steel. The battery can accommodates the electrode assembly 141 in an inner space through the upper open end and also accommodates the electrolyte (not shown) together.

It is desirable that the lithium secondary battery 140 of the present invention does not include a current interruption device (CID).

As illustrated in FIG. 4, the battery can 142 is electrically connected to a non-coating portion 146b of the negative electrode, and may function as a negative electrode terminal that contacts an external power source to transfer a current applied from the external power source to the negative electrode.

If necessary, a beading portion 147 and a crimping portion 148 may be included at an upper end of the battery can 142.The beading portion 147 may be formed by pressing an outer circumferential surface of the battery can 142 to a distance D1.The beading portion 147 prevents the electrode assembly 141 accommodated inside the battery can 142 from escaping through an upper end opening of the battery can 142, and may function as a support on which the sealing body 143 is stably placed.

The crimping portion 148 may be formed on an upper portion of the beading portion 147 and has an extended and bent shape to surround an outer circumferential surface of a cap plate 143a disposed on the beading portion 147 and a portion of an upper surface of the cap plate 143a.

Next, the sealing body 143 is for sealing the open end of the battery can 142, wherein it includes the cap plate 143a and a first gasket 143b providing airtightness between the cap plate 143a and the battery can 142 and having insulation properties, and, if necessary, may further include a connection plate 143c electrically and mechanically bonded to the cap plate 143a.The cap plate 143a may be pressed onto the beading portion 147 formed in the battery can 142 and may be fixed by the crimping portion 148.

The cap plate 143a is a component formed of a conductive metallic material, wherein it covers the upper end opening of the battery can 142. The cap plate 143a is electrically connected to the positive electrode of the electrode assembly 141, and is electrically insulated from the battery can 142 through the first gasket 143b.Thus, the cap plate 143a may function as a positive electrode terminal of the lithium secondary battery. The cap plate 143a may include a protrusion 143d protruding upward from the center C, and the protrusion143d may contact an external power source to allow a current to be applied from the external power source.

The first gasket 143b may be disposed between the cap plate 143a and the crimping portion 148 to secure airtightness of the battery can 142 and to electrically insulate the battery can 142 and the cap plate 143a.

The lithium secondary battery 140 according to the present invention may further include current collecting plates 144 and 145, if necessary. The current collecting plates are respectively bonded to anon-coating portion146a of the positive electrode and the non-coating portion 146b of the negative electrode, and connected to the electrode terminals (i.e., the positive electrode terminal and the negative electrode terminal).

Specifically, the lithium secondary battery 140 according to the present invention may include the first current collecting plate 144 bonded to an upper portion of the electrode assembly 141 and the second current collecting plate 145 bonded to a lower portion of the electrode assembly 141.

The first current collecting plate 144 and/or the second current collecting plate 145 may be further included.

The first current collecting plate 144 is bonded to the upper portion of the electrode assembly 141. The first current collecting plate 144 is formed of a conductive metallic material, such as aluminum, copper, and nickel, and is electrically connected to the non-coating portion 146a of the positive electrode. A lead 149 may be connected to the first current collecting plate 144. The lead 149 may extend upward from the electrode assembly 141 and may be bonded to the connection plate 143c or may be directly bonded to a lower surface of the cap plate 143a. The lead 149 and other components may be bonded through welding. Preferably, the first current collecting plate 144 may be formed in one piece with the lead 149. In this case, the lead 149 may have a plate shape extending outward from a center of the first current collecting plate 144.

The first current collecting plate 144 is bonded to an end of the non-coating portion 146a of the positive electrode, and the bonding, for example, may be performed by a method such as laser welding, resistance welding, ultrasonic welding, and soldering.

The second current collecting plate 145 is bonded to the lower portion of the electrode assembly 141. The second current collecting plate 145 is formed of a conductive metallic material, such as aluminum, copper, and nickel, and is electrically connected to the non-coating portion 146b of the negative electrode. One surface of the second current collecting plate 145 may be bonded to the non-coating portion 146b of the negative electrode, and an opposite surface may be bonded to an inner bottom surface of the battery can 142. In this case, the bonding may be performed by a method such as laser welding, resistance welding, ultrasonic welding, and soldering.

The lithium secondary battery 140 according to the present invention may further include an insulator 146, if necessary. The insulator 146 may be disposed to cover an upper surface of the first current collecting plate 144. Since the insulator 146 covers the first current collecting plate 144, a direct contact between the first current collecting plate 144 and an inner circumferential surface of the battery can 142 may be prevented.

The insulator 146 includes a lead hole 151 so that the lead 149 extending upward from the first current collecting plate 144 may be drawn out. The lead 149 is drawn upward through the lead hole 151 and bonded to a lower surface of the connection plate 143c or the lower surface of the cap plate 143a.

The insulator 146 may be formed of an insulating polymer resin, for example, a polymer resin material such as polyethylene, polypropylene, polyimide, or polybutylene terephthalate.

The lithium secondary battery 140 according to the present invention may further include a venting portion 152 formed on the lower surface of the battery can 142, if necessary. The venting portion 152 corresponds to a region having a thinner thickness than a surrounding region in the lower surface of the battery can 142. Since the venting portion 152 is thin, it is structurally weaker than the surrounding region. Thus, if a pressure in the lithium secondary battery 140 is increased to a certain level or higher, the venting portion 152 is ruptured and gas in the battery case 152 may be discharged to the outside to prevent explosion of the battery.

A cross-sectional view of a lithium secondary battery according to another embodiment of the present invention is illustrated in FIG.5.

Referring to FIG. 5, a lithium secondary battery 170 according to another embodiment of the present invention has different structures of battery case and sealing body in comparison to the lithium secondary battery 140illustrated in FIG. 4and has substantially the same configurations of electrode assembly and electrolyte.

Specifically, the lithium secondary battery 170according to the another embodiment of the present invention includes a battery can 171 through which a rivet terminal 172 is installed. The rivet terminal 172 is installed on a closed surface (upper surface in the drawing) partially closed at one end of the battery can 171. The rivet terminal 172 is riveted to a through hole (first opening of a first end) of the battery can 171 in a state in which an insulating second gasket 173 is disposed therebetween. The rivet terminal 172 is exposed to the outside in a direction opposite to a direction of gravity.

The rivet terminal 172 includes a terminal exposed portion 172a and a terminal insertion portion 172b.The terminal exposed portion 172a is exposed to the outside of the closed surface of the battery can 171. The terminal exposed portion 172a may be located at approximately a center of the partially closed surface of the battery can 171. A maximum diameter of the terminal exposed portion 172a may be formed to be greater than a maximum diameter of the through hole formed in the battery can 171. The terminal insertion portion 172b may be electrically connected to the non-coating portion 146a of the positive electrode through approximately the center of the closed surface of the battery can 171.The terminal insertion portion 172b may be riveted on an inner surface of the battery can 171. That is, an end of the terminal insertion portion 172b may have a shape curved toward the inner surface of the battery can 171. A maximum diameter of the end of the terminal insertion portion 172b may be greater than the maximum diameter of the through hole of the battery can 171.

A lower end surface of the terminal insertion portion 172b may be welded to the first current collecting plate 144 connected to the non-coating portion 146a of the positive electrode. An insulating cap 174 formed of an insulating material may be disposed between the first current collecting plate 144 and the inner surface of the battery can 171. The insulating cap 174 covers an upper portion of the first current collecting plate 144 and an upper edge portion of the electrode assembly 141. Thus, it may prevent a short circuit from being caused by contact between an outer circumferential non-coating portion B3 of the electrode assembly 141 and the inner surface of the battery can 171 having a different polarity. The terminal insertion portion 172b of the rivet terminal 172 may pass through the insulating cap 174 to be welded to the first collector plate 144.

The second gasket 173 is disposed between the battery can 171 and the rivet terminal 172 to prevent an electrical contact between the battery can 171 and the rivet terminal 172 which have opposite polarities to each other. Thus, the upper surface having a substantially flat shape of the battery can 171 may function as a positive electrode terminal of the lithium secondary battery 170.

The second gasket 173 includes a gasket exposed portion 173a and a gasket insertion portion 173b. The gasket exposed portion 173a is disposed between the terminal exposed portion 172a of the rivet terminal 172 and the battery can 171. The gasket insertion portion 173b is disposed between the terminal insertion portion 172b of the rivet terminal 172 and the battery can 171. The gasket insertion portion 173b may be closely attached to the inner surface of the battery can 171by being deformed together during the riveting of the terminal insertion portion 172b. The second gasket 173, for example, may be formed of a polymer resin having insulation properties.

The gasket exposed portion 173a of the second gasket 173 may have an extended shape to cover an outer circumferential surface of the terminal exposed portion 172a of the rivet terminal 172. In a case in which the second gasket 173 covers the outer circumferential surface of the rivet terminal 172, occurrence of a short circuit in a process of bonding an electrical connection component, such as a bus bar, to the upper surface of the battery can 171 and/or to the rivet terminal 172 may be prevented. Although not shown in the drawing, the gasket exposed portion 173a may have an extended shape to cover not only the outer circumferential surface of the terminal exposed portion 172a but also a portion of an upper surface thereof.

In a case in which the second gasket 173 is formed of the polymer resin, the second gasket 173 may be bonded to the battery can 171 and the rivet terminal 172 by heat fusion. In this case, airtightness at a bonding interface between the second gasket 173 and the rivet terminal 172 and at a bonding interface between the second gasket 173 and the battery can 171 may be enhanced. In a case in which the gasket exposed portion 173a of the second gasket 173 has a shape extending to the upper surface of the terminal exposed portion 172a, the rivet terminal 172 may be integrally bonded to the second gasket 173 by insert injection molding.

A region 175 other than regions occupied by the rivet terminal 172 and the second gasket 173 in the upper surface of the battery can 171 corresponds to a negative electrode terminal having a polarity opposite to that of the rivet terminal 172.

A second current collecting plate 176 is bonded to the lower portion of the electrode assembly 141. The second current collecting plate 176 is formed of a conductive metallic material, such as aluminum, steel, copper, and nickel, and is electrically connected to the non-coating portion 146b of the negative electrode.

Preferably, the second current collecting plate 176 is electrically connected to the battery can 171. For this purpose, at least a portion of an edge portion of the second current collecting plate 176 may be fixed by being disposed between the inner surface of the battery can 171 and the first gasket 178b. In one example, the at least a portion of the edge portion of the second current collecting plate 176 may be fixed to a beading portion 180 by welding while being supported on a lower end surface of the beading portion 180 formed at a lower end of the battery can 171. In a modified example, the at least a portion of the edge portion of the second current collecting plate 176 may be directly welded to an inner wall surface of the battery can 171.

The second current collecting plate 176 may have a plurality of irregularities (not shown) which are radially formed on a surface facing the non-coating portion 146b. In a case in which the irregularities are formed, the second current collecting plate 176 may be pressed to press the irregularities into the non-coating portion 146b.

Preferably, the second current collecting plate 176 and an end of the non-coating portion 146b may be bonded by welding, for example, laser welding.

A sealing body 178 sealing a lower open end of the battery can 171 includes a cap plate 178a and a first gasket 178b.The first gasket 178b electrically separates the cap plate 178a and the battery can 171. A crimping portion 181 fixes an edge of the cap plate 178a and the first gasket 178b together. A venting portion 179 is included in the cap plate 178a. A configuration of the venting portion 179 is substantially the same as that of the above-described embodiment.

Preferably, the cap plate 178a is formed of a conductive metallic material. However, since the first gasket 178b is disposed between the cap plate 178a and the battery can 171, the cap plate 178a has no electrical polarity. The sealing body 178 functions to seal the lower open end of the battery can 171 and to discharge gas when an internal pressure of the battery cell 170 is increased above a critical value.

Preferably, the rivet terminal 172 electrically connected to the non-coating portion 146a of the positive electrode is used as the positive electrode terminal. Also, the portion 175 excluding the rivet terminal 172 in the upper surface of the battery can 171, which is electrically connected to the non-coating portion 146b of the negative electrode through the second current collecting plate 176, is used as the negative electrode terminal. As described above, in a case in which the two electrode terminals are disposed on the upper portion of the lithium secondary battery, it is possible to dispose electrical connection components, such as a bus bar, on only one side of the lithium secondary battery 170. This may lead to simplification of a battery pack structure and improvement of energy density. Furthermore, since the portion 175 used as the negative electrode terminal has a substantially flat shape, a sufficient bonding area may be secured for bonding the electrical connection components such as a bus bar. Accordingly, the lithium secondary battery 170 may reduce resistance at a bonding portion of the electrical connection component to a desired level.

In a case in which a lithium secondary battery is formed in a tab-less structure as described above, since the battery having the tab-less structure has less current concentration than a conventional battery having electrode tabs, it may effectively reduce heat generation in the battery, and, accordingly, an effect of improving thermal stability of the battery may be obtained.

Next, a battery pack including the lithium secondary battery according to the present invention as a unit cell will be described.

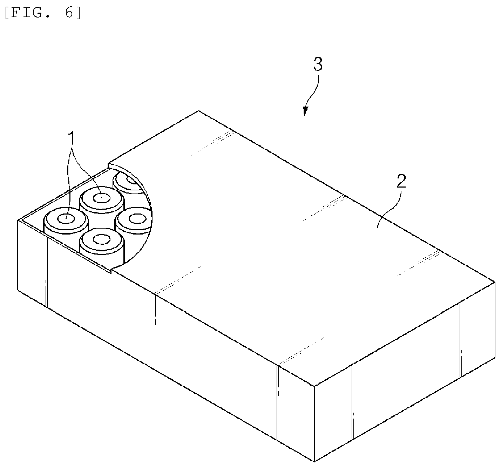

The lithium secondary battery of the present invention as described above may be used as a unit cell to prepare a battery pack. A configuration of a battery pack according to an embodiment of the present invention is schematically illustrated in FIG. 6.Referring to FIG. 6, a battery pack 3 according to an embodiment of the present invention includes an assembly, in which lithium secondary batteries 1 are electrically connected, and a pack housing 2 accommodating the assembly. The lithium secondary battery 1 is the lithium secondary battery according to the above-described embodiment. In the drawing, for convenience of illustration, parts, such as a bus bar for electrically connecting the lithium secondary batteries 1, a cooling unit, and an external terminal, are omitted.

The battery pack 3 may be mounted in a vehicle. The vehicle, for example, may be an electric vehicle, a hybrid vehicle, or a plug-in hybrid vehicle. The vehicle includes a four-wheeled vehicle or a two-wheeled vehicle.

Hereinafter, the present invention will be described in more detail, according to specific examples.

### Examples and Comparative Examples

### Example 1

A first negative electrode active material layer slurry was prepared by mixing a first negative electrode active material:a negative electrode conductive agent:styrene-butadiene rubber (SBR): carboxymethyl cellulose (CMC) in water at a weight ratio of 98.15:0.05:0.9:0.9. In this case, a mixture of a Si/C composite: natural graphite at a weight ratio of 15:85 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.1:0.1:0.9:0.9. In this case, a mixture of a Si/C composite: artificial graphite at a weight ratio of 5:95 was used as the second negative electrode active material, and single-walled carbon nanotubes were used as the negative electrode conductive agent.

After the above-prepared first negative electrode active material layer slurry was applied onto a copper current collector and dried at 80°C to form a first negative electrode active material layer, the above-prepared second negative electrode active material layer slurry was applied onto the formed first negative electrode active material layer, dried at 80°C and then rolled to prepare a negative electrode. In the negative electrode, the first negative electrode active material layer had a thickness of 60 µm and a porosity of 22%, and the second negative electrode active material layer had a thickness of 70 µm and a porosity of 28%. In this case, a volume of pores included in the first negative electrode active material layer and a volume of pores included in the second negative electrode active material layer were measured to have a ratio of 30:70.

### Example 2

A first negative electrode active material layer slurry was prepared by mixing a first negative electrode active material: a negative electrode conductive agent:styrene-butadiene rubber (SBR): carboxymethyl cellulose (CMC) in water at a weight ratio of 98.15:0.05:0.9:0.9. In this case, a mixture of a Si/C composite: natural graphite at a weight ratio of 15:85 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.1:0.1:0.9:0.9. In this case, a mixture of a Si/C composite: artificial graphite at a weight ratio of 5:95 was used as the second negative electrode active material, and single-walled carbon nanotubes were used as the negative electrode conductive agent.

The above-prepared first negative electrode active material layer slurry was applied onto a copper current collector, and the above-prepared second negative electrode active material layer slurry was applied onto the applied first negative electrode active material layer slurry, dried at 80°C and then rolled to prepare a negative electrode. In the negative electrode, a first negative electrode active material layer had a thickness of 64 µm and a porosity of 26%, and a second negative electrode active material layer had a thickness of 66 µm and a porosity of 24%.In this case, a volume of pores included in the first negative electrode active material layer and a volume of pores included in the second negative electrode active material layer were measured to have a ratio of 24:76.

### Comparative Example 1

A first negative electrode active material layer slurry was prepared by mixing a first negative electrode active material: a negative electrode conductive agent:styrene-butadiene rubber (SBR): carboxymethyl cellulose (CMC) in water at a weight ratio of 98.125:0.075:0.9:0.9. In this case, a mixture of a Si/C composite: natural graphite at a weight ratio of 10:90 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.125:0.075:0.9:0.9. In this case, a mixture of a Si/C composite: artificial graphite at a weight ratio of 10:90 was used as the second negative electrode active material, and single-walled carbon nanotubes were used as the negative electrode conductive agent.

The above-prepared first negative electrode active material layer slurry was applied onto a copper current collector, and the above-prepared second negative electrode active material layer slurry was applied onto the applied first negative electrode active material layer slurry, dried at 80°C and then rolled to prepare a negative electrode. In the negative electrode, a first negative electrode active material layer had a thickness of 65 µm and a porosity of 25%, and a second negative electrode active material layer had a thickness of 65 µm and a porosity of 25%.In this case, a volume of pores included in the first negative electrode active material layer and a volume of pores included in the second negative electrode active material layer were measured to have a ratio of 50:50.

### Comparative Example 2

A first negative electrode active material layer slurry was prepared by mixing a first negative electrode active material: a negative electrode conductive agent:styrene-butadiene rubber (SBR): carboxymethyl cellulose (CMC) in water at a weight ratio of 98.1:0.1:0.9:0.9. In this case, a mixture of a Si/C composite: natural graphite at a weight ratio of 5:95 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.15:0.05:0.9:0.9. In this case, a mixture of a Si/C composite: artificial graphite at a weight ratio of 15:85 was used as the second negative electrode active material, and single-walled carbon nanotubes were used as the negative electrode conductive agent.

The above-prepared first negative electrode active material layer slurry was applied onto a copper current collector, and the above-prepared second negative electrode active material layer slurry was applied onto the applied first negative electrode active material layer slurry, dried at 98°C and then rolled to prepare a negative electrode. In the negative electrode, a first negative electrode active material layer had a thickness of 70 µm and a porosity of 28%, and a second negative electrode active material layer had a thickness of 60 µm and a porosity of 22%.In this case, a volume of pores included in the first negative electrode active material layer and a volume of pores included in the second negative electrode active material layer were measured to have a ratio of 70:30.

### Comparative Example 3

A first negative electrode active material layer slurry was prepared by mixing a first negative electrode active material: a negative electrode conductive agent:styrene-butadiene rubber (SBR): carboxymethyl cellulose (CMC) in water at a weight ratio of 98.15:0.05:0.9:0.9. In this case, a mixture of a Si/C composite: natural graphite at a weight ratio of 15:85 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.1:0.1:0.9:0.9. In this case, a mixture of a Si/C composite: artificial graphite at a weight ratio of 5:95 was used as the second negative electrode active material, and single-walled carbon nanotubes were used as the negative electrode conductive agent.

The above-prepared first negative electrode active material layer slurry was applied onto a copper current collector, and the above-prepared second negative electrode active material layer slurry was applied onto the applied first negative electrode active material layer slurry, dried at 80°C and then rolled to prepare a negative electrode. In the negative electrode, a first negative electrode active material layer had a thickness of 60 µm and a porosity of 28%, and a second negative electrode active material layer had a thickness of 70 µm and a porosity of 22%.In this case, a volume of pores included in the first negative electrode active material layer and a volume of pores included in the second negative electrode active material layer were measured to have a ratio of 70:30.

### Comparative Example4

A first negative electrode active material layer slurry was prepared by mixing a first negative electrode active material: a negative electrode conductive agent:styrene-butadiene rubber (SBR): carboxymethyl cellulose (CMC) in water at a weight ratio of 98.15:0.05:0.9:0.9. In this case, a mixture of a Si/C composite: natural graphite at a weight ratio of 15:85 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.1:0.1:0.9:0.9. In this case, a mixture of a Si/C composite: artificial graphite at a weight ratio of 5:95 was used as the second negative electrode active material, and single-walled carbon nanotubes were used as the negative electrode conductive agent.

The above-prepared first negative electrode active material layer slurry was applied onto a copper current collector, and the above-prepared second negative electrode active material layer slurry was applied onto the applied first negative electrode active material layer slurry, dried at 80°C and then rolled to prepare a negative electrode. In the negative electrode, a first negative electrode active material layer had a thickness of 55 µm and a porosity of 20%, and a second negative electrode active material layer had a thickness of 75 µm and a porosity of 30%.In this case, a volume of pores included in the first negative electrode active material layer and a volume of pores included in the second negative electrode active material layer were measured to have a ratio of 10:90.

### Comparative Example5

A first negative electrode active material layer slurry was prepared by mixing a first negative electrode active material: a negative electrode conductive agent:styrene-butadiene rubber (SBR): carboxymethyl cellulose (CMC) in water at a weight ratio of 98.15:0.05:0.9:0.9. In this case, a mixture of a Si/C composite: natural graphite at a weight ratio of 5:95 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.1:0.1:0.9:0.9. In this case, a mixture of a Si/C composite: artificial graphite at a weight ratio of 15:85 was used as the second negative electrode active material, and single-walled carbon nanotubes were used as the negative electrode conductive agent.

The above-prepared first negative electrode active material layer slurry was applied onto a copper current collector, and the above-prepared second negative electrode active material layer slurry was applied onto the applied first negative electrode active material layer slurry, dried at 80°C and then rolled to prepare a negative electrode. In the negative electrode, a first negative electrode active material layer had a thickness of 60 µm and a porosity of 22%, and a second negative electrode active material layer had a thickness of 70 µm and a porosity of 28%.In this case, a volume of pores included in the first negative electrode active material layer and a volume of pores included in the second negative electrode active material layer were measured to have a ratio of 30:70.

### Comparative Example6: Main Configurations 2 and 3 Satisfied +Artificial Graphite Included in the First Layer, and Natural Graphite Included in the Second Layer

A first negative electrode active material layer slurry was prepared by mixing a first negative electrode active material: a negative electrode conductive agent:styrene-butadiene rubber (SBR): carboxymethyl cellulose (CMC) in water at a weight ratio of 98.15:0.05:0.9:0.9. In this case, a mixture of a Si/C composite: artificial graphite at a weight ratio of 15:85 was used as the first negative electrode active material, and single-walled carbon nanotubes were used as the negative electrode conductive agent.

Next, a second negative electrode active material layer slurry was prepared by mixing a second negative electrode active material: a negative electrode conductive agent: styrene-butadiene rubber (SBR): carboxymethyl cellulose in water at a weight ratio of 98.1:0.1:0.9:0.9. In this case, a mixture of a Si/C composite:natural graphite at a weight ratio of 5:95 was used as the second negative electrode active material, and single-walled carbon nanotubes were used as the negative electrode conductive agent.

The above-prepared first negative electrode active material layer slurry was applied onto a copper current collector, and the above-prepared second negative electrode active material layer slurry was applied onto the applied first negative electrode active material layer slurry, dried at 80°C and then rolled to prepare a negative electrode. In the negative electrode, a first negative electrode active material layer had a thickness of 60 µm and a porosity of 22%, and a second negative electrode active material layer had a thickness of 70 µm and a porosity of 28%.In this case, a volume of pores included in the first negative electrode active material layer and a volume of pores included in the second negative electrode active material layer were measured to have a ratio of 28:72.

Characteristics of the negative electrodes prepared in the examples and the comparative examples are presented in Table 1 below. In this case, the volume of the pores of the first negative electrode active material layer, the volume of the pores of the second negative electrode active material layer, and porosity in the negative electrodes prepared in the examples and the comparative examples were measured by the following methods.
- Volume of Pores: The negative electrodes prepared in the examples and the comparative examples were cross-sectioned using an ion milling system employing an Ar⁺ ion beam (manufacturer: HitachiHigh-Tech, product name: Ar blade 5000, accelerating voltage: 6 kV, ion beam current: 350 µA). The first negative electrode active material layer and the second negative electrode active material layer were distinguished by comprehensively considering differences in brightness according to an amount of the silicon-based active material and the thicknesses of the first negative electrode active material layer and the second negative electrode active material layer in scanning electron microscope (SEM) images of the cross-sectioned negative electrodes. Thereafter, for each of the first negative electrode active material layer and the second negative electrode active material layer, the volume of the pores was calculated from nitrogen adsorption isotherms under a liquid nitrogen atmosphere at 77 K obtained using BELSORP-MAX (MicrotracBEL corp.). In this case, the volume of the pores was calculated using a BJH (Barrett-Joyner-Halenda) plot for pores having diameters of 2 nm to 185 nm.
- Porosity: The first negative electrode active material layer and the second negative electrode active material layer were distinguished in the same manner as in the measurement of the volume of the pores, and a volume of each layer was calculated from cross-sectional areas of the first negative electrode active material layer and the second negative electrode active material layer. Thereafter, for each of the first negative electrode active material layer and the second negative electrode active material layer, a percentage of the volume of the pores relative to a total volume was calculated.

**[Table 1]**

| | First negative electrode active material layer | | Second negative electrode active material layer | | Volume of pores included in the first negative electrode active material layer/total volume of pores included in the entire first and second negative electrode layers (%) |
|---|---|---|---|---|---|
| | Si/C composite content in the first negative electrode active material (wt %) | Porosity (%) | Si/C composite content in the second negative electrode active material (wt %) | Porosity (%) | |
| Example 1 | 15 | 22 | 5 | 28 | 30 |
| Example 2 | 15 | 26 | 5 | 24 | 30 |
| Comparative Example 1 | 10 | 25 | 10 | 25 | 50 |
| Comparative Example 2 | 5 | 28 | 15 | 22 | 70 |
| Comparative Example 3 | 15 | 28 | 5 | 22 | 70 |
| Comparative Example 4 | 15 | 20 | 5 | 30 | 10 |
| Comparative Example 5 | 5 | 22 | 15 | 28 | 30 |
| Comparative Example 6 | 15 | 22 | 5 | 28 | 28 |

### Experimental Example 1:Negative Electrode Performance Evaluation

### (1) Measurement of Tortuosity

After preparing two each of the above-prepared negative electrodes of Examples 1 and 2 and Comparative Examples 1 to 6, an electrode assembly was prepared by disposing a separator between the two negative electrodes. The electrode assembly was placed in a battery case, an electrolyte solution (ethylene carbonate:ethyl methyl carbonate = 3:7 volume ratio) not containing a lithium salt was injected, and the battery case was aged for 24 hours to prepare a symmetric coin cell (Symmetric cell) .Thereafter, a current having a frequency of 0.1 to 1,000,000 Hz and an amplitude of 10 mV was applied to the symmetric coin cell, and tortuosity was measured according to Equation A below using a graph measured by electrochemical impedance spectroscopy (EIS) .The results thereof are presented in Table 2 below.
- Equation A: $Tortuosity \left(τ\right) = R / {R}_{th}$

In Equation A, R is an x-intercept value calculated by extrapolating a linear region of the graph measured through EIS measurement, and Rₜₕ is a value defined by Equation B below.
- Equation B: 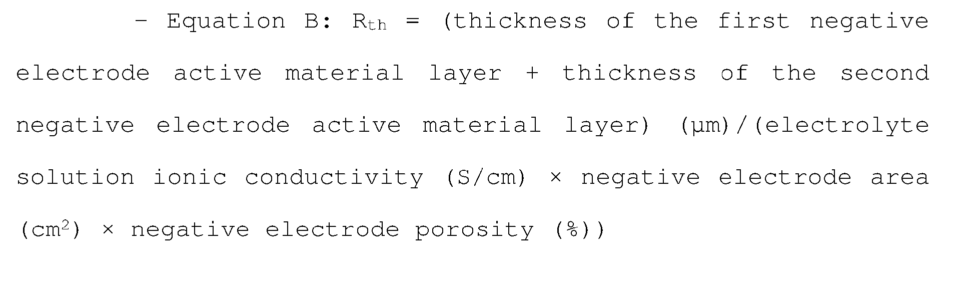 Rth = (thickness of the first negative electrode active material layer + thickness of the second negative electrode active material layer) (µm)/ (electrolyte solution ionic conductivity (S/cm) × negative electrode area (cm2) × negative electrode porosity (%))

### (2) MP Resistance Measurement

Overall sheet resistance of the negative electrodes prepared in Examples 1 and 2 and Comparative Examples 1 to 6 and interfacial resistance between the first negative electrode active material layer and the current collector were measured using an MP resistance meter (product name: RM2610, manufacturer: HIOKI). The results thereof are presented in Table 2 below.

### (3) Electrolyte Impregnability Evaluation

An electrolyte impregnability evaluation was performed on the negative electrodes prepared in Examples 1 and 2 and Comparative Examples 1 to 6. Specifically, each negative electrode was punched into a size of 5 cm × 5 cm, and then attached to a glass plate with tape so as to be in flat and close contact with the glass plate, and a 10 µℓ syringe was completely filled with an electrolyte without air bubbles. Thereafter, 1 µℓ of the electrolyte was dropped onto the negative electrode attached to the glass plate, and time until a surface of the negative electrode became dry was measured to evaluate electrolyte impregnability of each negative electrode.

In this case, the electrolyte used was prepared by adding 0.5 M LiPF₆ and 0.5 M LiFSI to an organic solvent, in which ethylene carbonate: ethyl methyl carbonate: dimethyl carbonate were mixed in a volume ratio of 20:5:75, and adding 3 wt% of vinylene carbonate, 1 wt% of propane sultone, 0.2 wt% of succinonitrile, 0.2 wt% of methyl prop-2-yn-1-yl carbonate, and 0.2 wt% of propargyl 1H-imidazole-1-carboxylateas additives. The results thereof are presented in Table 2 below.

**[Table 2]**

| | Tortuosity | Overall sheet resistance [mΩ·cm] | Interfacial resistance [mΩ·cm²] | Electrolyte impregnability [sec] |
|---|---|---|---|---|
| Example 1 | 2.052 | 44.40 | 6.95 | 56 |
| Example 2 | 2.054 | 48.65 | 7.13 | 65 |
| Comparative Example 1 | 2.172 | 94.18 | 14.15 | 184 |
| Comparative Example 2 | 2.074 | 80.18 | 11.53 | 175 |
| Comparative Example 3 | 2.215 | 95.63 | 15.21 | 254 |
| Comparative Example 4 | 2.056 | 49.12 | 7.99 | 71 |
| Comparative Example 5 | 2.054 | 78.98 | 10.31 | 67 |
| Comparative Example 6 | 2.196 | 89.66 | 13.24 | 178 |

Referring to Table 2,it may be confirmed that the negative electrodes prepared in Examples 1 and 2 had significantly superior tortuosity, overall sheet resistance, interfacial resistance, and electrolyte impregnability than the negative electrodes prepared in Comparative Examples 1 to 6.

### Experimental Example 2:Initial Discharge Capacity Evaluation

After an electrode assembly was prepared by disposing a separator between each of the negative electrodes prepared in Examples 1 and 2 and Comparative Examples 1 to 6and a positive electrode and was then placed inside a battery case, an electrolyte solution was injected into the battery case to prepare a lithium secondary battery (coin full-cell).

The positive electrode was prepared by preparing a positive electrode slurry by mixing a lithium nickel-based oxide as a positive electrode active material, single-walled carbon nanotubes as a conductive agent, and polyvinylidene fluoride (PVDF), as a binder,in a weight ratio of 97.6:0.6:1.8 in an N-methyl-2-pyrrolidone solvent, applying the positive electrode slurry onto an aluminum current collector, drying the applied positive electrode slurry, and then rolling the dried aluminum current collector. In this case, the lithium nickel-based oxide included nickel among total metals excluding lithium in an amount of 93 mol%, included nickel, cobalt, manganese, and aluminum, and was a particle in the form of a single crystal.

The electrolyte used was prepared by adding 0.5 M LiPF₆ and 0.5 M LiFSI to an organic solvent, in which ethylene carbonate: ethyl methyl carbonate: dimethyl carbonate were mixed in a volume ratio of 20:5:75, and adding 3 wt% of vinylene carbonate, 1 wt% of propane sultone, 0.2 wt% of succinonitrile, 0.2 wt% of methyl prop-2-yn-1-yl carbonate, and 0.2 wt% of propargyl 1H-imidazole-1-carboxylateas additives.

The above-prepared lithium secondary batteries were charged at a C-rate of 0.2C to 4.2 V and then discharged to 2.5 V to perform a formation process. Thereafter, the lithium secondary batteries were charged (cut-off 0.005C) at a C-rate of 0.2C to 4.2 V in a constant current-constant voltage (CCCV) mode, and then discharged at 0.2C to 2.5 V to measure capacity in a first discharge cycle as initial capacity. The results thereof are presented in Table 3 below.

### Experimental Example 3:Initial Resistance Evaluation

The lithium secondary batteries including the negative electrodes of Examples 1 and 2 and Comparative Examples 1 to 6 prepared in Experimental Example 2 were charged at 0.2C to 4.2 V at 25°C and then discharged to 2.5 V to perform a formation process. Thereafter, the batteries were charged to a state of charge (SOC) of 100% by charging (0.005Ccutoff)them at 0.5C (reference capacity 1C = 6.3 mAh/g)to 4.2 V at 25°C under a CC-CV condition. Subsequently, the coin half-cells discharged to an SOC of 50% were discharged at a constant current of 0.5C for 10 seconds at 25°C, a voltage drop generated was then measured, and initial resistance (DCIR) was calculated using Ohm's law based on the measured value. The results thereof are presented in Table 3 below.

### Experimental Example 4:Rapid Charging Characteristics Evaluation

The lithium secondary batteries including the negative electrodes of Examples 1 and 2 and Comparative Examples 1 to 6 prepared in Experimental Example 2 were charged (0.005Ccutoff)to 4.2 V under a CC-CV condition at 25°C, and then discharged at a constant current of 1.0C to 2.5 V to performing 124 charge and discharge cycles, and discharge capacity after 1 cycle and discharge capacity after 124cycles were measured. Then, a capacity retention was measured according to Equation C below. The results thereof are presented in Table 3 below. Equation C: 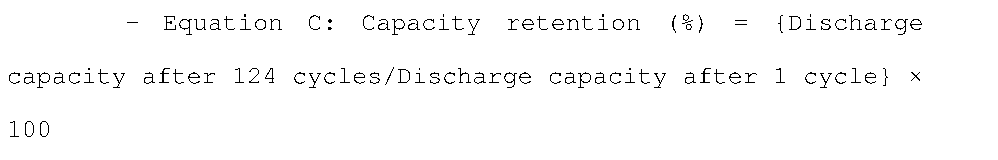 Capacity retention (%) = {Discharge capacity after 124 cycles/Discharge capacity after 1 cycle} × 100

**[Table 3]**

| | Initial capacity [mAh] | Initial resistance [mΩ] | Capacity retention [%, @124 cycle] |
|---|---|---|---|
| Example 1 | 6.13 | 9.71 | 88.71 |
| Example 2 | 6.12 | 9.89 | 88.13 |
| Comparative Example 1 | 5.86 | 10.8 | 85.24 |
| Comparative Example 2 | 6.11 | 9.9 | 86.13 |
| Comparative Example 3 | 5.78 | 10.98 | 86.43 |
| Comparative Example 4 | 6.07 | 10.19 | 87.12 |
| Comparative Example 5 | 6.08 | 10.67 | 86.91 |
| Comparative Example 6 | 6.04 | 10.1 | 86.65 |

Referring to Table 3,it may be confirmed that the lithium secondary batteries prepared by using the negative electrodes prepared in Examples 1 and 2 had higher initial capacity, lower initial resistance, and higher capacity retention during rapid charging than the lithium secondary batteries preparedby using the negative electrodes prepared in Comparative Examples 1 to 6.

### (Description of the Symbols)

1: Lithium Secondary Battery
2: Pack Housing
3: Battery Pack
10: Positive Electrode
11: Negative Electrode
12: Separator
20: Current Collector
21:Active Material Layer
21a:NegativeElectrode Active Material Layer
22: Non-coating Portion
22a: Non-coating Portion of the Negative Electrode
22c: Non-coating Portion of the Positive Electrode
24: Insulation Layer
C: Winding Center
140: Lithium Secondary Battery
141: Electrode Assembly
142: Battery Can
143: Sealing Body
143a: Cap Plate
143b: First Gasket
143c: Connection Plate
143d: Protrusion
144: First Current Collecting Plate
145: Second Current Collecting Plate
146: Insulator
146a: Non-coating Portion of the Positive Electrode
146b: Non-coating Portion of the Negative Electrode
147: Beading Portion
148: Crimping Portion
149: Lead
151: Lead Hole
152: Venting Portion
170: Lithium Secondary Battery
171: Battery Can
172: Rivet Terminal
172a: Terminal Exposed Portion
172b: Terminal Insertion Portion
173: Second Gasket
173a: Gasket Exposed Portion
173b: Gasket Insertion Portion
174: Insulating Cap
176: Second Current Collecting Plate
178: Sealing Body
178a: Cap Plate
178b: First Gasket
179: Venting Portion
180: Beading Portion
181: Crimping Portion

## Claims

1. A negative electrode comprising:
a negative electrode collector; a first negative electrode active material layer disposed on the negative electrode collector; and a second negative electrode active material layer disposed on the first negative electrode active material layer,
wherein a volume of pores included in the first negative electrode active material layer is 11% to 49% of a total volume of pores included in the first negative electrode active material layer and the second negative electrode active material layer,
the first negative electrode active material layer comprises a first negative electrode active material including natural graphite and a first silicon-based negative electrode active material,
the second negative electrode active material layer comprises a second negative electrode active material including artificial graphite and a second silicon-based negative electrode active material, and
an amount of the first silicon-based negative electrode active material included in the first negative electrode active material layer is greater than an amount of the second silicon-based negative electrode active material included in the second negative electrode active material layer.

2. The negative electrode of claim 1, wherein a ratio (X₁/X₂) of the amount (X₁) of the first silicon-based negative electrode active material included in the first negative electrode active material layer to the amount (X₂) of the second silicon-based negative electrode active material included in the second negative electrode active material layer is greater than 1 and less than or equal to 10.

3. The negative electrode of claim 1, wherein the first silicon-based negative electrode active material is included in an amount of 5 wt% to 30 wt% based on a total weight of the first negative electrode active material.

4. The negative electrode of claim 1, wherein the second silicon-based negative electrode active material is included in an amount of 1 wt% to 20 wt% based on a total weight of the second negative electrode active material.

5. The negative electrode of claim 1, wherein the first negative electrode active material layer has a porosity of 15% to 30%.

6. The negative electrode of claim 1, wherein the second negative electrode active material layer has a porosity of 20% to 35%.

7. The negative electrode of claim 1, wherein a thickness of the first negative electrode active material layer is 35% to 50% of a total thickness of the first negative electrode active material layer and the second negative electrode active material layer.

8. The negative electrode of claim 1, wherein the first silicon-based negative electrode active material and the second silicon-based negative electrode active material each comprise a Si/C composite.

9. A lithium secondary battery comprising:
an electrode assembly including the negative electrode of any one of claims 1 to 8, a positive electrode, and a separator disposed between the negative electrode and the positive electrode; an electrolyte; and a battery case in which the electrode assembly and the electrolyte are accommodated.

10. The lithium secondary battery of claim 9, wherein the lithium secondary battery is a cylindrical lithium secondary battery in which a ratio of a diameter (R) of the lithium secondary battery to a height (h) of the lithium secondary battery is 0.4 or more.

11. The lithium secondary battery of claim 9, wherein the lithium secondary battery is a 46110 cell, a 48110 cell, a 4880 cell, or a 4680 cell.

12. The lithium secondary battery of claim 9, wherein the positive electrode and the negative electrode each comprise a non-coating portion in which an active material layer is not formed, and
at least a portion of the non-coating portion of the positive electrode and the non-coating portion of the negative electrode defines an electrode tab.

13. The lithium secondary battery of claim 12, wherein a current collecting plate is bonded to each of the non-coating portion of the positive electrode and the non-coating portion of the negative electrode, and
the current collecting plate is connected to an electrode terminal.

14. The lithium secondary battery of claim 12, wherein the non-coating portion of the positive electrode and the non-coating portion of the negative electrode are processed in a form of a plurality of independently bendable segments, and
at least a portion of the plurality of segments is bent toward a winding center of the electrode assembly.
